# EUROPEAN PATENT APPLICATION

(11) **EP 4 811 242 A1**
(43) Date of publication of application: **23.09.2026**
(21) Application number: 25189731.0
(22) Date of filing: 15.07.2025
(51) Int. Cl.: G06Q 10/08, G06Q 10/0836, G06Q 10/083, G06Q 10/087

(54) **AN INTELLIGENT RETAIL SYSTEM AND METHOD**

(30) Priority: 21.03.2025 WO PCT/SG2025/050213
(71) Applicant: Vanbo Investments Pte. Ltd., 238964 Singapore (SG)
(72) Inventor: WEN, Zhang, 238964 Singapore (SG)
(74) Representative: Mewburn Ellis LLP

(57) **Abstract**

This present invention relates to the field of automated vending, particularly to a retail system and method. The retail system comprises a plurality of service robots (01), a plurality of storage units, and a scheduling unit. The storage units comprise station storage units (02) and mobile storage units (03). The station storage units (02) are arranged at predetermined locations, while the mobile storage units (03) are disposed inside the service robots (01). The scheduling unit is further configured to, in response to an order request from a user, select a target service robot from the plurality of service robots (01) based on the delivery location corresponding to the order request and the item to be delivered, and control the target service robot to deliver the item to the delivery location. The scheduling unit is also configured to instruct the service robot (01) to retrieve items from the station storage unit (02) and store them in the mobile storage unit (03) of the service robot (01). This system achieves a balanced optimization among product variety, lightweight inventory, and efficient delivery response under limited storage capacity, thereby enhancing the response speed and service quality of unmanned retail.

## Description

### TECHNICAL FIELD

This present invention relates to the field of automated vending, particularly to an intelligent retail system and method.

### BACKGROUND

The following discussion of the background to the invention is intended to facilitate an understanding of the present invention only. It should be appreciated that the discussion is not an acknowledgement or admission that any of the material referred to was published, known or part of the common general knowledge of the person skilled in the art in any jurisdiction as at the priority date of the invention.

With the continuous advancement of technology, the logistics and retail industries are undergoing unprecedented transformations. The mobile supermarket, as an emerging retail model, eliminates the fixed geographical location constraints of traditional stores by bringing products directly to consumers.

For example, U.S. Patent Application Publication No. US20180068514A1 "Intelligent Scheduling Systems and Methods for Vending Robots" discloses an intelligent scheduling system and corresponding method for an automated vending robot (011). The system comprises: (i) at least one video monitor configured to capture population images in multiple areas and obtain population density information for the areas through image processing of the population images; (ii) a scheduling control server configured to allocate at least one automated vending robot (011) to the multiple areas based on the population density information and send a scheduling instruction to the allocated automated vending robot (011), wherein the scheduling instruction specifies a location for the automated vending robot (011); the at least one automated vending robot (011), which autonomously moves to the allocated area for product sales according to the scheduling instruction specifying the designated area location from the scheduling control backend.

Similarly, U.S. Patent Application Publication No. US20190206175A1 "Apparatus and Method for Mobile Vending" discloses a system for mobile vending, comprising: an item dispenser configured to display a plurality of items for purchase, a set of motorized wheels, a navigation sensor device, a communication device, and, a control circuit configured to navigate the mobile vending machine based on navigation instructions.

Similarly, Chinese Patent Application No. CN110472909A "Intelligent Distribution System, Method, Server, Robot and Storage Medium" discloses an intelligent delivery system, method, cloud server, robot, and storage medium. The method comprises: sending a first scheduling instruction to a second robot according to a delivery task, causing the second robot to transport an intelligent storage device from an outdoor designated location to a designated docking position in a target building; sending a second scheduling instruction to a first robot, causing the first robot to transport the intelligent storage device from the designated docking position to a preset location on the target floor according to the second scheduling instruction; acquiring receipt verification information sent by the intelligent storage device; controlling the intelligent storage device to open the compartment door corresponding to the item to be delivered based on the receipt verification information, allowing the recipient to retrieve the item.

However, the delivery efficiency of robots is limited by their carrying capacity and battery life (e.g., operating time per charge). As a result, the amount and variety of goods that a single robot can carry in one trip are restricted, making it difficult to meet the demand for diverse product consumption. Additionally, robots struggle to respond quickly to large-scale orders, severely limiting the widespread adoption of mobile supermarkets.

Thus, there exists a need to develop an improved retail system and method, addressing at least one of the problems associated with conventional systems.

### SUMMARY

Specifically, to address the above-mentioned technical problems, the present invention specifically uses the following technical solutions:

Accordingly, an aspect of the invention refers to a retail system, wherein the retail system comprises a plurality of service robots (01), a plurality of storage units, and a scheduling unit; the storage units comprise station storage units (02) and mobile storage units (03); the station storage units (02) are arranged at predetermined locations, the mobile storage units (03) are disposed inside the service robots (01), and the loading capacity of the station storage units (02) is greater than the loading capacity of the mobile storage units (03); the scheduling unit is further configured to, in response to an order request from a user, select a target service robot from the plurality of service robots (01) based on a delivery location corresponding to the order request and an item to be delivered, and control the target service robot to deliver the item to the delivery location; the scheduling unit is configured to instruct the service robot (01) to retrieve an item from the station storage unit (02) and store it in the mobile storage unit (03) of the service robot (01).

In some embodiments, each service robot (01) moves within a predetermined patrol range; the scheduling unit is further configured to: acquire historical sales data and/or traffic data within the predetermined patrol range of each service robot (01); designate an area as a target patrol area when the historical sales data exceeds a preset sales threshold and/or the traffic data exceeds a preset traffic threshold; update the patrol route of the service robot (01) within the patrol range based on the target patrol area, so that the service robot (01) passes through the target patrol area and/or stays within the target patrol area for a predetermined duration.

In some embodiments, the scheduling unit is further configured to: when the target service robot arrives at the delivery location and fails to identify a target user to receive the item to be delivered, search for and connect to at least one monitoring device within the area corresponding to the delivery location; select a temporary storage position for the item based on the monitoring image of at least one monitoring device, and control the target service robot to place the item to be delivered at the temporary storage position.

In some embodiments, the scheduling unit is further configured to monitor the receipt status of the item to be delivered based on the monitoring image of at least one monitoring device.

In some embodiments, the service robot (01) is provided with a visual acquisition module; the visual acquisition module is configured to capture environmental images of the location where the service robot (01) is situated; the scheduling unit is further configured to: before the target service robot delivers the item to be delivered to the user, identify and verify the delivery location and/or the user identity based on the environmental images; before the service robot (01) transfers items to another service robot (01), identify and verify the identity of the other service robot (01) based on the environmental images.

In some embodiments, the scheduling unit is further configured to: monitor whether there are hygiene issues and/or safety risks at the location of the service robot (01) based on the environmental images; when hygiene issues and/or safety risks are detected, send an alert message to the supervisory personnel at the location.

In some embodiments, the scheduling unit is further configured to recognize traffic data based on the environmental images.

In some embodiments, the service robot (01) further comprises an item retrieval compartment, the item retrieval compartment being configured to display a preset quantity of some or all categories of items stored by the service robot (01), or the item retrieval compartment being configured to display the item to be delivered that the target service robot is delivering.

In some embodiments, the storage units further comprise an instant storage unit; the scheduling unit is further configured to control the target service robot to retrieve the item to be delivered from the instant storage unit and deliver it to the delivery location.

In some embodiments, the instant storage unit comprises at least one of a self-service storage locker, a self-service takeaway locker, a self-service parcel locker, a shared equipment locker, or a self-service vending locker. In some embodiments, the retail system further comprises an ordering program operating on a terminal device; the ordering program comprises a shopping interface and an order interface, wherein the shopping interface is configured to display a list of available items for sale to the user, allowing the user to select items from the list; the order interface is configured to complete the order checkout process and record the delivery location information.

In some embodiments, the terminal device comprises a mobile phone, a tablet, a computer, a smart wearable device, a smart home device, or a smart in-vehicle device.

In some embodiments, the scheduling unit is further configured to: obtain the delivery location information entered by the user in the order interface and determine the item to be delivered based on the items ordered and checked out in the order interface; generate an order request for the user based on the delivery location information and the item to be delivered.

In some embodiments, the scheduling unit is further configured to: calculate the total inventory of each item based on the inventory of items in the plurality of mobile storage units (03) within a preset delivery range of the delivery location; determine the items with an inventory total greater than a first inventory threshold as recommended items; prioritize the display of the recommended items in the item list on the shopping interface; and/or set a discounted price for the recommended items based on preset discount rules.

In some embodiments, the scheduling unit is further configured to: select a first-type service robot and a second-type service robot from the plurality of service robots (01), wherein the mobile storage unit (03) of the first-type service robot is configured to store any category of items, and the mobile storage unit (03) of the second-type service robot is configured to store multiple categories of items.

In some embodiments, the service robot (01) is provided with a first communication module and a second communication module; the first communication module is configured for data exchange between the service robot (01) and the scheduling unit, and the second communication module is configured for data exchange between service robots (01).

In some embodiments, the first communication module is a Wi-Fi module, and the second communication module is a Bluetooth module; or the first communication module is a Wi-Fi module, and the second communication module is a preset self-organizing network.

In some embodiments, the service robot (01) comprises a vending robot (011) and a replenishment robot (012); the mobile storage unit (03) comprises a primary storage unit (031) and a secondary storage unit (032); the primary storage unit (031) is disposed inside the vending robot (011), and the secondary storage unit (032) is disposed inside the replenishment robot (012); the scheduling unit is configured to, in response to an order request from a user, select a target vending robot from the plurality of vending robots (011) based on the delivery location corresponding to the order request and the item to be delivered, and control the target vending robot to deliver the item to the delivery location; the scheduling unit is further configured to instruct the replenishment robot (012) to retrieve items from the station storage unit (02) and store them in the secondary storage unit (032) of the replenishment robot (012); instruct the replenishment robot (012) and the vending robot (011) to transfer part or all of the items from the secondary storage unit (032) to the primary storage unit (031).

In some embodiments, at least one replenishment robot (012) corresponding to the vending robot (011) is provided within a first replenishment range (041) of the vending robot (011); at least one station storage unit (02) corresponding to the replenishment robot (012) is provided within a second replenishment range (042) of the replenishment robot (012).

In some embodiments, the vending robot (011) is a first-type service robot, and the replenishment robot (012) is a second-type service robot; the scheduling unit is further configured to: when the inventory of items in the vending robot (011) falls below a second inventory threshold, instruct the replenishment robot (012) within the first replenishment range (041) of the vending robot (011) to meet with the vending robot (011) and transfer part or all of the items in the secondary storage unit (032) to the corresponding primary storage unit (031); when the quantity of the item to be delivered exceeds the inventory of the target vending robot, instruct the replenishment robot (012) and/or other vending robots (011) within the first replenishment range (041) of the vending robot (011) to meet with the vending robot (011) and transfer part or all of the corresponding items in the replenishment robot (012) and/or other vending robots (011) to the primary storage unit

(031) of the target vending robot.

In some embodiments, the scheduling unit is further configured to: S201 calculate the total inventory of each item based on the inventory of items in the plurality of mobile storage units (03) within a preset delivery range of the delivery location; S202 if the total inventory of any item is less than a third inventory threshold, generate replenishment parameters for a target replenishment robot within the preset delivery range, wherein the replenishment parameters include item information and item quantity; S203 instruct the target replenishment robot to retrieve the corresponding items from the corresponding station storage unit (02) according to the replenishment parameters and store them in the secondary storage unit (032) of the target replenishment robot.

In some embodiments, the scheduling unit is further configured to: S204 if the total inventory of any item is less than a fourth inventory threshold, generate replenishment parameters for the station storage unit (02) within the second replenishment range (042) of the target replenishment robot, wherein the fourth inventory threshold is greater than the third inventory threshold; S205 replenish the station storage unit (02) based on the replenishment parameters of the station storage unit (02).

In some embodiments, the scheduling unit is further configured to: monitor in real time the number of replenishment robots (012) within the first replenishment range (041) of each vending robot (011); when the number of replenishment robots (012) falls below a preset quantity, expand the first replenishment range (041) to a third replenishment range.

In some embodiments, the scheduling unit comprises a first scheduling subunit located in a server, and a second scheduling subunit located in a selected robot; wherein the first scheduling subunit is configured to generate and transmit a task route to the selected robot, and the second scheduling subunit is configured to receive the task route from the first scheduling subunit and control the selected robot to navigate along the task route.

In some embodiments, the second scheduling subunit is further configured to receive and analyze environmental factors surrounding the selected robot while navigating the task route, and to generate real-time navigation adjustments based on the environmental factors to guide the selected robot along the task route.

In some embodiments, the analysis of the environmental factors is performed using a second artificial intelligence model.

In some embodiments, the second scheduling subunit is further configured to receive an instruction directly from a user, analyze the instruction, and guide the selected service robot to respond accordingly.

Another aspect of the invention refers to a retail method, wherein the method is applied to the retail system according to any one of Claims 1 to 23, the method comprising: in response to an order request from a user, selecting a target service robot from the plurality of service robots (01) based on the delivery location corresponding to the order request and the item to be delivered, and controlling the target service robot to deliver the item to the delivery location; instructing the service robot (01) to retrieve items from the station storage unit (02) and store them in the mobile storage unit (03) of the service robot (01).

In some embodiments, the retail system further comprises an ordering program operating on a mobile apparatus; the ordering program comprises a shopping interface and an order interface, wherein the shopping interface is configured to display a list of available items for sale to the user, and the order interface is configured to complete the order checkout process and record the delivery location information; the method comprising: generating the order interface based on the items selected by the user from the item list displayed on the shopping interface; obtaining the delivery location information entered by the user in the order interface and determining the item to be delivered based on the items ordered and checked out in the order interface; generating an order request for the user based on the delivery location information and the item to be delivered.

In some embodiments, the method comprises: calculating the total inventory of each item based on the inventory of items in the plurality of mobile storage units (03) within a preset delivery range of the delivery location; determining the items with an inventory total greater than a first inventory threshold as recommended items; prioritizing the display of the recommended items in the item list on the shopping interface; and/or setting a discounted price for the recommended items based on preset discount rules.

### BRIEF DESCRIPTION OF THE DRAWINGS

In the figures, which illustrate, by way of non-limiting examples only, embodiments of the present invention,
**[****FIG. 1****]:** illustrates a schematic diagram of a retail system provided in an embodiment of the present invention;
**[****FIG. 2****]:** illustrates a schematic diagram of a storage unit provided in an embodiment of the present invention;
**[****FIG. 3****]:** illustrates another schematic diagram of a retail system provided in an embodiment of the present invention;
**[****FIG. 4****]:** illustrates another schematic diagram of a storage unit provided in an embodiment of the present invention; and,
**[****FIG. 5****]:** illustrates a schematic flowchart of a retail method provided in an embodiment of the present invention.
**[****FIG. 6****]:** illustrates a schematic block diagram of the replenishment range in a retail system provided in an embodiment of the present invention.
**[****FIG. 7****]:** illustrates a schematic block diagram of the replenishment method in a retail system provided in an embodiment of the present invention.
**[****FIG. 8****]:** a schematic diagram showing the communication flow among the central server, the robots, and the user, according to some embodiments of the present invention.

### DETAILED DESCRIPTION

Throughout this document, unless otherwise indicated to the contrary, the terms "comprising", "consisting of", "having" and the like, are to be construed as non-exhaustive, or in other words, as meaning "including, but not limited to".

Furthermore, throughout the document, unless the context requires otherwise, the word "include" or variations such as "includes" or "including" will be understood to imply the inclusion of a stated integer or group of integers but not the exclusion of any other integer or group of integers.

Throughout this document, terms such as "module", "component", or "unit" are used solely for descriptive purposes and do not imply specific limitations. These terms may be used interchangeably. Throughout this document, unless explicitly defined otherwise, terms such as "disposed", "configured", and "arranged" should be interpreted broadly. The term "multiple" means two or more, including but not limited to two, three, four, five, etc.

In the context of the present invention, "items", also referred to as "products" or "goods", denote uniquely identifiable units, such as a 330ml Coca-Cola, which serves as the smallest unit for inventory management and retail sales within the retail system.

In the context of the present invention, the term "delivery location" refers to the designated destination where an item is delivered by the system and/or the service robots. For example, the delivery location may be the doorstep of an apartment unit, an HDB flat, or an office, where users of the system intend to receive the products, they have ordered.

In the context of the present invention, the term "order request" refers to refers to a user-initiated request that triggers the execution of one or more retail and logistics operations within the intelligent retail system. The order request may encompass purchasing, pickup, delivery, or inventory movement involving the system's service robots (01), storage units, and scheduling unit.

In a mobile supermarket scenario, a robot's carrying capacity is directly constrained by its power system and battery capacities. To extend battery life (i.e., operating time per charge), robots are typically equipped with high-capacity batteries of higher weights; however, the added weight reduces available cargo space and increases energy consumption (because the robots become heavier), limiting both the quantity and variety of goods transported per trip as well as the overall system efficiency. This constraint is particularly problematic in scenarios requiring comprehensive product coverage and large-scale order fulfillment, both of which are essential for an efficiently operating mobile supermarket that meets diverse customer demands. Due to limited inventory capacity, robots must frequently return to storage facilities for restocking/replenishment, often causing congestion and delivery delays. Consequently, conventional mobile supermarket systems often struggle to maintain stable, efficient, and real-time delivery performance, hindering their widespread adoption.

To address this issue, the present invention discloses an intelligent unmanned retail system that integrates multi-level storage, dynamic scheduling, and multi-robot collaboration to create an automated retail network with a buffered storage hierarchy (also referred to as a multi-tier storage system, which optimizes inventory flow through a structured, multi-layered storage approach). This system of the present invention, at least to some extent, achieves a balanced optimization among product diversity, lightweight inventory management, and high-efficiency delivery responsiveness under limited storage capacity, thereby improving the response speed and service quality of unmanned retail.

The following section provides a detailed description of various embodiments of the present invention with reference to the accompanying drawings. Unless otherwise stated, the features described in these embodiments may be freely combined where no conflicts arise.

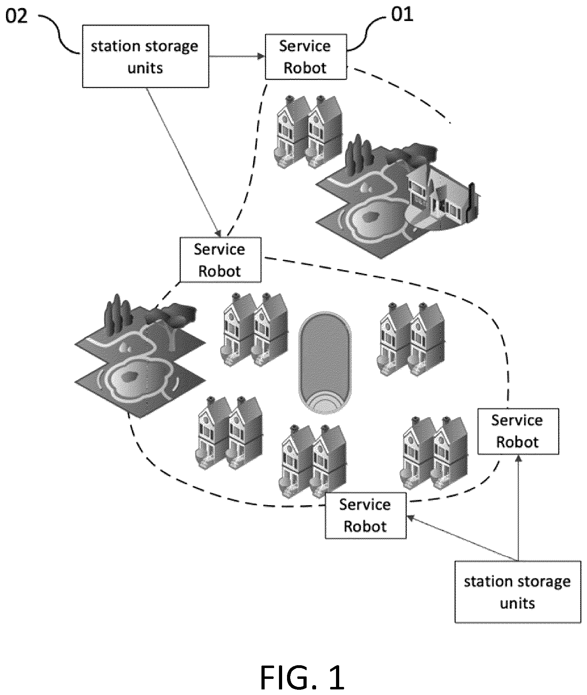

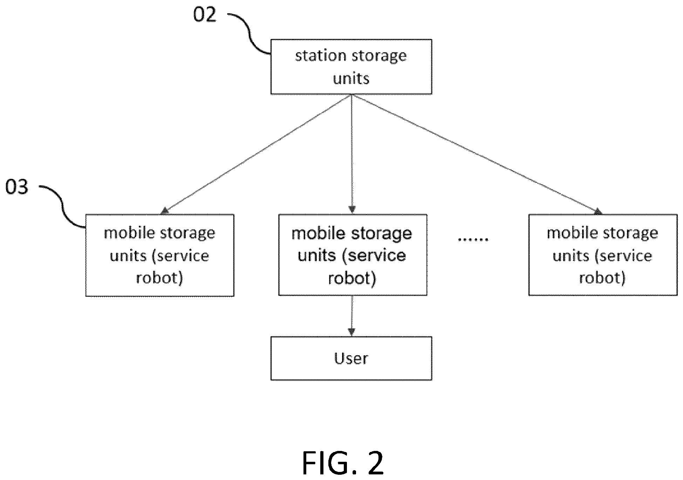

FIG. 1 is a schematic diagram of a retail system provided in an embodiment of the present invention. FIG. 2 is a schematic diagram of a storage unit provided in an embodiment of the present invention. As shown in FIGS. 1 and 2, an embodiment of the present invention provides a retail system, wherein the retail system comprises a plurality of service robots (01), a plurality of storage units, and a scheduling unit.

The storage units comprise station storage units (02) and mobile storage units (03). The station storage units (02) are arranged at predetermined locations, whereas the mobile storage units (03) are disposed inside the service robots (01). Additionally, the loading capacity of the station storage units (02) is greater than that of the mobile storage units (03).

The scheduling unit is further configured to respond to an order request from a user (e.g., via a mobile app) by selecting a target service robot from the plurality of service robots (01) based on a delivery location (e.g., the user's residential unit) corresponding to the order request and the item to be delivered. The scheduling unit then instructs the target service robot to deliver the item to the delivery location. Additionally, the scheduling unit instructs the service robot (01) to retrieve an item from the station storage unit (02) and store it in the mobile storage unit (03) of the service robot (01). In these embodiments, the service robot (01) is configured to directly replenish the inventory of its own mobile storage unit (03) from the station storage unit (02) (see FIG. 2).

The service robot (01) is an automated device with capabilities for autonomous movement, storage, and intelligent interaction. It is equipped with an internal mobile storage unit (03) for storing items to be sold and is capable of performing goods delivery, replenishment, and environmental sensing tasks. The service robot (01) is operable to support multi-robot collaboration and execute scheduling commands. It should be understood that the retail system comprises multiple service robots (01), forming a collaborative robot fleet. In some embodiments, the service robots (01) are operable to transfer items between each other through mechanical arm docking or rail-based pushing mechanisms.

The storage unit refers to facilities or equipment used for storing items. The storage unit comprises station storage units (02), which are positioned at designated locations; and mobile storage units (03), which are mounted on service robots (01). These two types of storage units serve distinct functions: station storage units (02) are configured to handle centralized storage for an area designated for service, while mobile storage units (03) facilitate distributed dynamic storage. Station storage units (02) are configured for centralized storage and management of all product categories and can be deployed in designated areas such as shopping malls, residential communities and office buildings. These station storage units (02) are configured to have relatively larger storage capacities, making them suitable for bulk inventory management. In some embodiments, when a shopping mall, residential complex, or office building is large in scale and serves a high density of users or customers, one or more station storage units (02) may be installed directly within the premises. Alternatively, in scenarios involving multiple smaller premises, a shared station storage unit (02) may be deployed at a centrally accessible location that conveniently serves all participating premises.

In contrast, mobile storage units (03) are built-in storage compartments within service robots (01). While their loading capacity is much smaller than that of station storage units (02), these service robots (1) are able to dynamically carry a certain quantity of goods, allowing for flexible allocation and real-time delivery.

The scheduling unit functions as the system's control centre. Using preset scheduling algorithms, the scheduling unit is operable to analyse user demand (such as delivery location coordinates and product information corresponding to the requested item), robot status (such as inventory levels and location coordinates), and environmental data (such as pedestrian and vehicle traffic). Based on these factors, the scheduling unit is operable to determine the target service robot, delivery route, inventory allocation, and multi-robot collaboration approach.

For example, in a goods sale and delivery scenario, when a user submits an order request via a mobile app, the scheduling unit receives and processes the request, then identifies the optimal service robot from the robot fleet based on delivery location coordinates and product inventory data. The selection process takes into account factors such as the robot's proximity to the delivery location and the availability of the requested item. Once the best-matching service robot (01) is identified, the system dispatches it to deliver the designated item (e.g., the purchased goods) to the specified location.

Additionally, the scheduling unit is configured to continuously manage storage resources across the system, including both the mobile storage units mounted on the robot fleet and the station storage units located at fixed positions. When the inventory in a mobile storage unit (03) is insufficient (or estimated to be insufficient or running low), the scheduling unit directs the service robot (01) to return to the station storage unit (02) for replenishment, forming an adaptive supply chain loop between station storage units (02) and mobile storage units (03) to facilitate dynamic inventory balance.

It should be understood that this retail system of the present invention attempts to achieve efficient goods storage and allocation by constructing a multi-tier storage system and an intelligent scheduling network. This approach facilitates high delivery efficiency while maintaining a high inventory turnover rate and enhancing user experience.

In some embodiments, each service robot (01) is programmed to operate within a predetermined patrol range.

Specifically, each service robot (01) is configured to operate within a predefined patrol range and is primarily responsible for handling delivery tasks occurring within this designated area. To optimize overall fleet efficiency and enhance response speed, the movement of each service robot (01) is restricted to its respective patrol range. The predetermined patrol range refers to a geographic area in which the service robot (01) is permitted to operate in the absence of active delivery tasks. For instance, the service robot (01) may remain stationed at a central location within its patrol range to enable prompt dispatch when a task arises, or it may be programmed to continuously navigate within the area for purposes such as environmental monitoring and readiness for immediate response upon receipt of a delivery request. The patrol range may be flexibly determined based on various factors, including service coverage requirements, desired response times, and the performance capabilities of the robot.

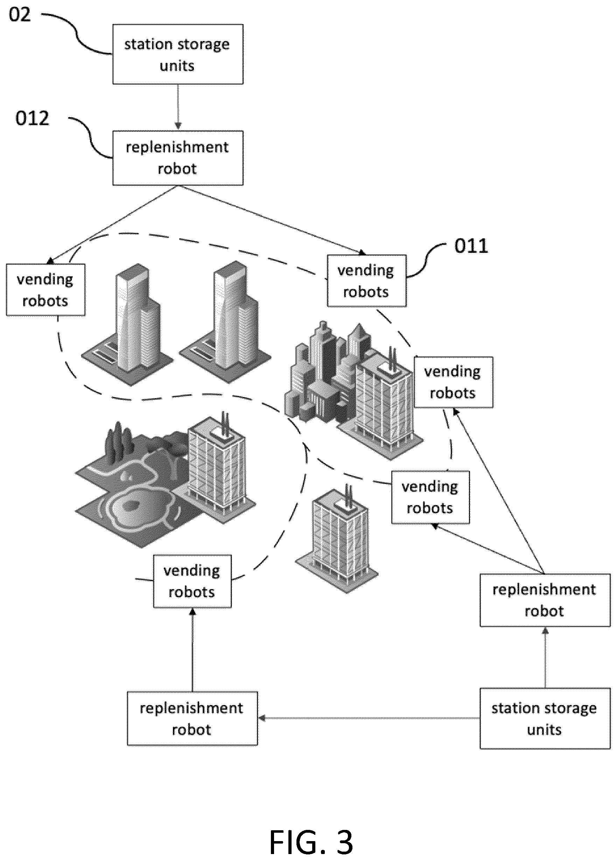

In some embodiments, the scheduling unit is operable to dynamically adjust the patrol path of service robots (01) by analysing historical sales data and/or traffic data within each patrol range (as illustrated in FIG. 1 and FIG. 3, the dotted lines represent the patrol ranges of the service robots (01)). For example, the scheduling unit is configured to retrieve historical sales data and/or traffic data from each service robot's (01) predetermined patrol range inside the patrol range. The scheduling unit is then operable to identify regions/locations where historical sales data exceed a preset sales threshold and/or traffic data exceed a preset traffic threshold, marking them as target patrol areas. Based on these target patrol areas, the system updates the patrol paths of service robots (01), ensuring these service robots pass through or remain within these high-priority areas for a predetermined duration.

Historical sales data refers to recorded sales transactions within the patrol range, including product types, sales volume, and transaction timestamps, which are used to predict future sales demand trends in different areas. A preset sales threshold is established as a trigger for optimizing patrol paths. The specific threshold value is adaptable based on practical needs and can be dynamically adjusted.

The scheduling unit is configured to continuously analyze the historical sales data within each patrol range in real time. When sales data in a particular area exceed the preset sales threshold, the system of the present invention designates this specific region as a priority service area or target patrol area. Accordingly, the scheduling unit reconfigures the patrol path of the service robot (01) to prioritize coverage of the target patrol area or extend the robot's stay duration within the target patrol area to enhance offline transaction rates and delivery response speed. For example, the robot may be programmed to remain stationed within a target patrol area for an extended duration, while reducing the frequency of navigation in other less active regions within the patrol range. In another example, the robot's patrol path may vary across different time periods, enabling it to cover different target patrol areas at different times of the day. This time-based path adjustment allows the system to adapt to fluctuating demand patterns and respond dynamically to changing operational needs.

Similarly, traffic data refers to records of pedestrian and/or vehicle movement collected through sensors or external systems within the predetermined patrol range. For example, in residential areas where vehicles are restricted to underground parking, only pedestrian movement is considered. In contrast, in other scenarios, such as residential areas permitting both pedestrian and vehicle movement, or office buildings and industrial parks where both pedestrian and vehicle traffic are present, the system accounts for both types of movement. In some embodiments, this traffic data is configured to comprise real-time crowd density statistics and dwell time analysis, which can be used to estimate the potential customer base and purchasing power in different areas. A preset traffic threshold is established to trigger patrol path optimization, with specific values adjusted according to operational needs.

The scheduling unit is operable to continuously analyze traffic data in real time.

When traffic data surpasses the preset traffic threshold, the retail system marks the area as a priority service area or target patrol area. Correspondingly, the scheduling unit reconfigures the patrol path of the service robot (01) to facilitate priority coverage of the target patrol area or extends the robot's stay duration in the area to enhance offline transaction rates and delivery efficiency.

It should be understood that a target patrol area is typically a location or region with high user density or strong consumer activity. By increasing the service robot's (01) dwell time in these areas, the retail system dynamically allocates robot resources, ensuring high-demand regions receive intensified service coverage while preventing resource wastage in low-demand areas.

In some embodiments, the preset duration can be flexibly and dynamically adjusted based on actual requirements. For example, the service robot (01) may remain in the target patrol area until it receives the next delivery task, balancing response speed and energy consumption.

Restricting the movement of service robots (01) within their respective predetermined patrol ranges, while dynamically adjusting their patrol paths, enables the retail system to maintain overall efficiency and stability in both response time and delivery performance. For instance, this arrangement prevents the system from over-deploying robots to a region that appears to be high-priority based on historical data, but where actual demand turns out to be lower than expected. At the same time, it ensures that a sufficient number of robots remain distributed across different patrol ranges, allowing even infrequent purchase requests within those areas to be promptly addressed. This helps prevent service blind spots and ensures balanced and consistent retail coverage across all regions.

In some embodiments, the scheduling unit is further configured to handle scenarios in which the target service robot arrives at the delivery location but is unable to identify or locate the intended user for item handover (e.g., when the user fails to appear to collect the purchased item). In such cases, the scheduling unit searches for and connects to at least one monitoring device (e.g., a security camera) within the corresponding delivery location area. Based on monitoring images captured by the monitoring device, the retail system identifies a suitable temporary storage location (such as a shelf or storage box positioned outside the residential unit) and instructs the target service robot to place the item at the selected location for temporary safekeeping.

In some embodiments, the monitoring device comprises a visual perception system that integrates with the retail system. Examples include security cameras, smart access control systems, and infrared sensors, which collect real-time environmental image data and transmit it to the scheduling unit. These monitoring devices are operable to assist in environmental analysis and monitoring of the delivery process.

Specifically, when a target service robot arrives at the user-designated delivery location but cannot verify the target user's identity through visual recognition or other authentication methods, the scheduling unit connects to the monitoring device at the delivery location. It then retrieves real-time multi-angle monitoring image data and, using image analysis algorithms, assesses the safety and visibility of the environment. Based on this analysis, the system identifies a temporary storage position that meets predefined conditions and transmits precise coordinate instructions to the target service robot, guiding it to place the item to be delivered at the designated location.

This arrangement for unattended delivery facilitates that even if the user does not arrive at the delivery location on time, the item is securely handled. It enhances the operational efficiency of service robots (01) while ensuring the safety and proper storage of goods.

The temporary storage position is selected based on factors such as visibility, security, suitability for the item, and pedestrian traffic patterns. Ideally, the system prioritizes locations that are easily noticeable to the target user, such as areas near prominent signage or well-lit regions. In some embodiments, the selected location is required to be within full monitoring coverage, ensuring no blind spots and incorporating physical security measures. Additionally, the storage position should be appropriately sized to accommodate the dimensions of the item to be delivered, while also being stable and level to prevent the item from tipping over. To minimize obstruction or accidental displacement, the system avoids selecting storage locations in areas with heavy pedestrian traffic or frequent congestion. By employing an intelligent storage and retrieval method, the system optimizes unattended deliveries, ensuring reliable and secure item handover in various scenarios.

In some embodiments, after the target service robot places the item to be delivered at the temporary storage position, the system further includes pushing a notification to the user's terminal (e.g., the user's mobile phone). This notification contains a location schematic and an order code, guiding the user to retrieve the item.

In some embodiments, the scheduling unit is further configured to monitor the receipt status of the item to be delivered using monitoring images captured by at least one monitoring device, such as a surveillance camera installed in the corridor outside the unit's door or a door-mounted surveillance camera directly attached to the unit's door. The receipt status refers to the outcome of the item delivery process and may include the following: (i) Signed-off status, indicating that the target user has successfully authenticated and collected the item; (ii) Unclaimed status, meaning the item to be delivered remains in place and has not been retrieved within a preset period; and (iii) Irregular status, indicating unauthorized access to the item, deviation from the temporary storage position, or a potential risk of damage.

Specifically, after the service robot (01) places the item at the designated temporary storage position, the system of present invention is operable to continue monitoring the area using the monitoring device. By applying computer vision algorithms, the system analyses item location changes and user interactions to confirm whether the item has been properly collected. This facilitates continuous tracking of the item's status in unattended delivery scenarios and enables real-time updates to the receipt status. This approach achieves a comprehensive management system for unmanned delivery, ensuring safe and secure item distribution while preventing loss or damage.

In some embodiments, the scheduling unit retrieves monitoring images in real time. If the system detects that the target user has collected the item, it marks the item as signed-off and stops monitoring its receipt status. If the item remains unclaimed within the preset period, the system marks it as unclaimed status and sends a secondary pickup reminder to the target user. If unauthorized access or abnormal movement is detected (e.g., the item is moved into a monitoring blind spot), the system triggers a security alert and notifies management personnel for intervention.

In some embodiments, the service robot (01) is equipped with a visual acquisition module, which continuously captures environmental images of the robot's current location. The visual acquisition module is configured to provide comprehensive and precise environmental perception by capturing real-time images or videos of the area surrounding the service robot (01). The module may include one or more high-resolution digital cameras and may also integrate infrared sensors or LiDAR (light detection and ranging) systems for enhanced perception capabilities.

In some embodiments, the scheduling unit is further configured to: (i) before the target service robot delivers the item to be delivered to the user, use environmental images to identify and verify the delivery location and/or user identity; and (ii) before a service robot (01) transfers an item to another service robot (01), use environmental images to identify and verify the recipient service robot (01).

Specifically, when a target service robot is executing an item delivery task, the visual acquisition module continuously captures environmental images of its current location and transmits them in real time to the scheduling unit. The scheduling unit is configured to analyse these images using image processing algorithms to compare landmark features (e.g., house numbers or signage) against the user-provided delivery address, ensuring that the robot arrives at the correct location. Additionally, the system verifies the user's identity using facial recognition or order code authentication. By implementing dual verification of both delivery location and user identity, the system of the present invention prevents delivery errors and enhances security in the unmanned retail process.

Before transferring goods between service robots (01), the visual acquisition module continuously captures environmental images of its current location. These images include identity markers of the service robots (01), such as QR codes or other identification patterns on the robot's body. The scheduling unit utilizes image analysis algorithms to recognize and verify the identity markers within the environmental images, preventing misdirected transfers or unauthorized operations.

By leveraging robotic vision, the system facilitates that goods are securely transferred to the correct recipient, enhancing the accuracy and security of the delivery and collaboration processes.

In some embodiments, the scheduling unit is further configured to monitor whether the current location of the service robot (01) presents hygiene issues and/or safety risks based on environmental images. If a hygiene issue or safety risk is detected, the system sends a notification to on-site supervisory personnel (e.g., staff from residential management office).

Specifically, the scheduling unit is operable to perform real-time environmental monitoring using images captured by the visual acquisition module of the service robot (01). By applying image recognition algorithms, the system of the present invention analyses the images for irregularities. If a hygiene issue or safety risk is detected, a notification is sent to supervisory personnel, such as mall administrators or property management staff, to assist in maintaining cleanliness and safety in the robot's operating environment. This functionality enhances the practicality of the retail system by ensuring a well-maintained operational area during goods delivery.

In the context of the present invention, a hygiene issue refers to violations of cleanliness standards in the service robot's (01) operating environment. Examples include accumulated or scattered garbage, liquid spills, food residue, or misplaced cleaning tools, which may impact environmental hygiene and user health.

A safety risk refers to hazardous conditions that may lead to or have already resulted in personal injury or equipment damage. Examples include obstructions blocking emergency exits, hazardous materials, slippery floors, elevator malfunctions, or suspicious individuals loitering.

Supervisory personnel are responsible for maintaining environmental hygiene and safety management. They receive notifications via their terminal devices (such as their mobile phones or a dedicated terminal device installed in their management office.), allowing them to mitigate or eliminate hygiene issues and/or safety risks. The notification provides detailed information, including environmental images, location coordinates, issue descriptions, and suggested actions. For example, a notification might state: "Food residue detected on the second floor of Building 1, Zone A - immediate cleanup required". This allows supervisory personnel to promptly assess and address hygiene or safety concerns, even before receiving reports from residents.

In some embodiments, the scheduling unit is further configured to recognize traffic data based on environmental images.

Specifically, the scheduling unit is configured to analyse real-time visual data captured at the service robot's (01) current location to calculate and monitor real-time traffic levels, generating traffic data for that area. This data can be used to optimize patrol paths for idle service robots (01) with no active delivery tasks, allowing them to navigate through high-traffic areas strategically to improve in-person sales and delivery response times. Additionally, traffic data can be used to adjust the working paths of busy service robots (01) actively executing delivery tasks, helping them avoid congested areas or peak-hour traffic, ensuring efficient service execution.

In some embodiments, the service robot (01) also comprises an item retrieval compartment (also known as product retrieval compartment/chamber), which is used to display either a portion or all categories of goods/items stored within the service robot (01) at a preset quantity limit or to showcase the item to be delivered by the target service robot. In some embodiments, the item retrieval compartment is a physical storage structure integrated into the service robot (01), featuring an open or semi-enclosed cavity designed to provide users with a clear view of available products or awaiting deliveries while supporting manual pickup by users. For example, the mobile storage unit (03) may include both a storage chamber and a display chamber, where the item retrieval compartment serves as the display chamber.

In its standard display mode, the item retrieval compartment is arranged with tiered or partitioned sections, visually organizing a portion or all categories of goods stored within the mobile storage unit (03) of the service robot (01). In some embodiments, each product category is displayed according to a preset quantity, creating a mobile sales window that allows users to browse and purchase items directly. The preset quantity limit for each product category is determined based on factors such as product size, sales frequency, and the robot's carrying capacity, and can be adjusted as needed.

Additionally, the item retrieval compartment can operate in a directed delivery mode, wherein, during an active delivery task, it automatically switches to a delivery area, displaying only the item to be delivered for the intended user.

In some embodiments, the item retrieval compartment can simultaneously operate in both standard display mode and directed delivery mode, where user-ordered goods are displayed in a designated section, while other areas continue showcasing a portion or all categories of goods stored within the mobile storage unit (03) of the service robot (01). To assist users, the system can incorporate indicator lights or screen prompts to guide the target user to collect their ordered items from the designated section.

In some embodiments, the preset display quantity is dynamically adjustable based on real-time inventory levels and sales strategies, thereby maintaining a balance between product visibility and replenishment efficiency, while also preventing low-demand items from occupying excessive storage space.

In some embodiments, the storage unit further comprises an instant storage unit, and the scheduling unit is configured to control the target service robot to retrieve the item to be delivered from the instant storage unit and deliver it to the delivery location.

The instant storage unit is a temporary storage facility designed to hold items awaiting delivery or user-stored goods. Examples of instant storage units include at least one of the following: self-service lockers, self-service takeaway lockers, self-service parcel lockers, shared equipment lockers, and self-service vending cabinets.

A self-service locker is an automated storage unit that allows users to store and retrieve personal belongings. A self-service takeaway locker is an intelligent storage system designed for holding takeout food orders. A self-service parcel locker is an automated package management unit that facilitates self-service parcel drop-off and pickup. A shared equipment locker is used for storing and managing shared-use smart devices, such as power banks or umbrellas. A self-service vending cabinet is a smart retail unit that enables users to select and purchase products independently.

Specifically, if an item ordered by a user is not pre-stored in the mobile storage unit (03) of the service robot (01) or the station storage unit (02) but instead is located in an instant storage unit at a specific location, the system controls the target service robot to travel to the designated instant storage unit, authenticate its identity, retrieve the item to be delivered, and proceed with the delivery task. By integrating distributed third-party storage facilities into the retail system through service robots (01), the system enables a hybrid model of retail and delivery services, further expanding the inventory resources and functional utility of the retail system.

In some embodiments, the retail system also comprises an ordering program that operates on terminal devices (e.g., a customer's smartphone or a dedicated terminal device installed in each unit). The ordering program includes a shopping interface and an order interface, where the shopping interface presents a list of available products for sale, allowing users to browse and select items, while the order interface facilitates order placement and payment and records delivery location information.

Specifically, the ordering program is an application installed on a terminal device (e.g., smartphone) that provides online retail services. Users can browse products online, select the desired items, and complete their purchases through the application. The shopping interface displays a list of available products, including product images, names, prices, and brief descriptions. The order interface presents a detailed list of selected items, displaying quantities, unit prices, and total prices, allowing users to review and finalize their orders. Additionally, the order interface is used to enter delivery location details and contact information, ensuring accurate delivery of purchased items to the designated location.

For example, users can browse products through the shopping interface, which presents a categorized list (e.g., food, daily necessities) and a search bar to display available products for sale. The interface may also offer filtering options based on price, sales volume, and stock availability. Users can view detailed product information by selecting a product card and add items to their shopping cart. Once the desired items are selected, users proceed to the order interface to complete checkout. This interface integrates payment gateways (such as Alipay, WeChat Pay) and automatically calculates the total cost and delivery fees, while also requiring users to enter or select a delivery location.

In some embodiments, the terminal device may include a mobile phone, tablet, computer, smart wearable device, smart home device, or in-vehicle smart system. Specifically, the ordering program can be installed on various terminal devices, including smartphones, tablets, personal computers, laptops, smartwatches, smart glasses, smart speakers, smart TVs, and industrial or in-vehicle embedded systems. The ordering program may be available in different client formats across devices, such as mobile applications, desktop applications, web applications, or dedicated control software, ensuring compatibility with different usage scenarios.

In some embodiments, the scheduling unit is further configured to retrieve the delivery location information entered by the user in the order interface and determine the item to be delivered based on the order details. The system then generates an order request based on the delivery location and item details.

Specifically, once the user completes the order interface entry, including delivery location details and payment, the scheduling unit extracts the recorded delivery location data (such as geographic coordinates) and the settled product details (such as product category codes, quantity, and specifications). Using this data, the system generates an order request for the corresponding delivery task, triggering target service robot selection, route planning, and item sorting operations.

In some embodiments, the scheduling unit is further configured to analyse inventory data across multiple mobile storage units (03) within the preset delivery range of the delivery location. The system calculates the total stock of each product and identifies recommended products by selecting those with inventory levels exceeding a first inventory threshold. These recommended products are given priority display in the shopping interface, and/or a discounted price is applied based on predefined promotional rules.

In the context of the present invention, product inventory refers to the actual quantity of a specific item stored within the mobile storage unit (03) of a service robot (01). Inventory data is synchronized in real-time with the scheduling unit. The first inventory threshold is a predefined limit set for different product categories to determine whether inventory is sufficient or overstocked, acting as a trigger for promotional programs.

Specifically, a preset delivery range is defined based on the delivery location (e.g., a 500-meter radius). The system then retrieves inventory data from the mobile storage units (03) of all service robots (01) within this range. The scheduling unit aggregates the inventory levels of the same product type across different mobile storage units (03) to calculate the total stock quantity available within the delivery range. If the total inventory of a specific product exceeds a first inventory threshold, the system classifies it as a recommended product, indicating that it is either at risk of overstocking or readily available for fast delivery.

To promote recommended products, the system prioritizes their display in the shopping interface, either by placing them at the top of the product list or labeling them as "Hot Sale Recommendations". The interface layout is optimized to draw user attention to these products. Additionally, predefined discount rules can be applied to automatically generate discounted prices for recommended products, further encouraging purchases. These predefined discount rules are part of a dynamic pricing arrangement that temporarily adjusts prices based on specific conditions, such as regional overstock, approaching expiration dates, or promotional periods.

By integrating real-time inventory data within the preset delivery range, the scheduling unit optimizes the shopping interface and pricing strategies, encouraging users to prioritize purchasing recommended products that are well-stocked and available for fast delivery. This approach enhances inventory turnover rates, reduces storage and logistics costs, and improves delivery efficiency.

In some embodiments, the scheduling unit is also configured to categorize service robots (01) into first-type service robots and second-type service robots. The mobile storage unit (03) of the first-type service robot is designated for storing a single product category, while the mobile storage unit (03) of the second-type service robot is configured to store multiple product categories. To optimize inventory distribution and delivery efficiency, the scheduling unit manages differentiated inventory allocations within the service robot (01) fleet, distinguishing between these two types based on storage strategies.

The first-type service robot is specialized for storing a specific category of products, such as pharmaceuticals, daily necessities, or beverages. It may also be dedicated to high-consumption items, such as best-selling products. This specialization enables first-type service robots to focus on single-category retail, where fewer product types are stored, but in larger quantities. By reducing category redundancy, the system maximizes storage capacity for a single product type, improving space utilization. This approach is particularly suitable for high-demand scenarios requiring rapid replenishment, allowing for lower logistics costs and faster replenishment cycles.

In contrast, the second-type service robot is designed for multi-category storage, accommodating items such as snacks, pharmaceuticals, and electronic accessories within the same mobile storage unit (03). The second-type service robot is optimized for versatility, ensuring it can fulfill diverse customer demands. While its storage capacity for each individual product type may be lower, it provides greater product variety, making it ideal for handling multi-category orders, on-demand replenishment, and dynamic response to user needs.

In some embodiments, the deployment ratio of the two types of service robots (01) can be preconfigured based on historical sales data and dynamically adjusted using real-time sales data. This facilitates a precise alignment between storage resources and market demand, allowing the system to optimize inventory allocation in response to sales trends.

By maintaining a diverse product range and providing a minimal surplus inventory in each local area, the retail system can efficiently process orders while ensuring that sufficient and varied goods are available. This enables the system to achieve a balanced optimization of product diversity, lightweight inventory management, and fast delivery response within limited storage capacity, ultimately improving the response speed and service quality of unmanned retail operations.

In some embodiments, the service robot (01) is equipped with a first communication module and a second communication module. The first communication module facilitates data exchange between the service robot (01) and the scheduling unit, while the second communication module enables data exchange between service robots (01).

Specifically, the service robot (01) achieves efficient collaboration through at least two communication modules. The first communication module establishes a communication link with the scheduling unit, supporting real-time inventory updates, path planning, and coordination functions. The second communication module establishes direct communication between service robots (01), enabling location sharing, inventory redistribution, and collaborative task execution. By integrating two distinct communication modules, the system reduces data relay latency and enhances the coordinated response efficiency within the robot fleet.

In some embodiments, the first communication module is a Wi-Fi module, while the second communication module is a Bluetooth module. In other embodiments, the first communication module is a Wi-Fi module, while the second communication module operates on a predefined self-organizing network.

Wi-Fi is well-suited for complex data exchanges with central servers or cloud platforms, meeting the data exchange requirements between service robots (01) and the scheduling unit. Bluetooth, on the other hand, is ideal for quick pairing and simple user interactions, while a self-organizing network supports basic status synchronization and task allocation among large-scale robot fleets. This design leverages Wi-Fi's high bandwidth capabilities for fast task execution, while also utilizing Bluetooth and self-organizing networks for low-power, direct communication between robots. As a result, the retail system maintains rapid delivery responsiveness while ensuring low-energy communication among devices.

In some embodiments, the service robot (01) is further equipped with a third communication module and a fourth communication module. The third communication module enables the service robot (01) to conduct data exchange beyond a predefined range, while the fourth communication module provides an alternative means of communication for such scenarios.

To facilitate communication across different environments, allowing service robots (01) to maintain stable connectivity both indoors and outdoors, over short and long distances, the third communication module can be a cellular network module, such as 4G or 5G, providing reliable long-range connectivity when operating outside the preset range. The fourth communication module can be a Wi-Fi module, used to support high-bandwidth requirements in fixed areas.

In some embodiments, the service robot (01) is configured with either a first and second communication module or a third and fourth communication module. If any communication module fails, the service robot (01) can switch to an alternative module for emergency operation, thereby enhancing the flexibility and reliability of the retail system.

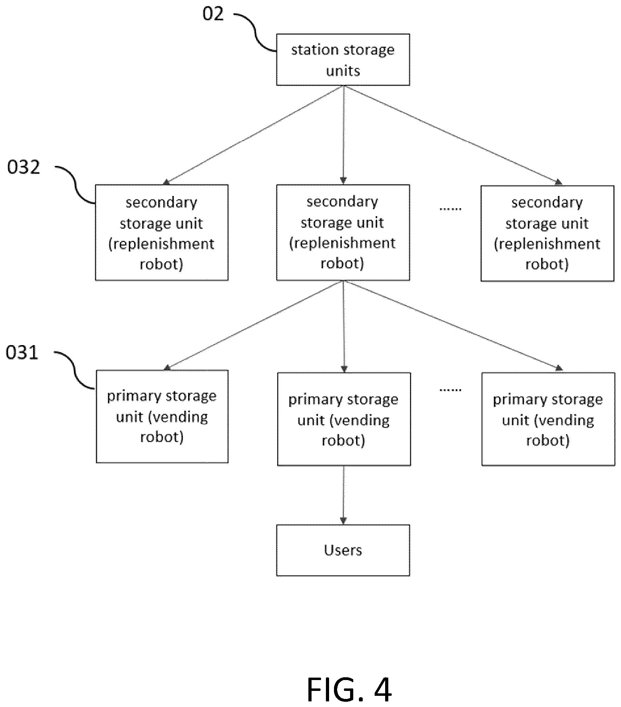

In some embodiments, FIG. 3 illustrates another retail system provided in the present invention, and FIG. 4 illustrates another storage unit.

As shown in FIGS. 3 and 4, this embodiment of the retail system features service robots (01) categorized into vending robots (011) and replenishment robots (012). The mobile storage unit (03) is divided into a primary storage unit (031) and a secondary storage unit (032). The primary storage unit (031) is located inside the vending robot (011), while the secondary storage unit (032) is housed within the replenishment robot (012).

The scheduling unit is configured to respond to user order requests by selecting a target vending robot (011) from multiple available vending robots (011) based on the delivery location and the item to be delivered. It then controls the target vending robot to deliver the item to the delivery location. Additionally, the scheduling unit directs the replenishment robot (012) to retrieve items from the station storage unit (02) and store them in its secondary storage unit (032). The system further coordinates inventory transfer from the secondary storage unit (032) of the replenishment robot (012) to the primary storage unit (031) of the vending robot (011), ensuring sufficient stock availability.

In this system, service robots (01) are classified based on functional use, with vending robots (011) dedicated to customer-facing operations, including item delivery, inventory display, and user authentication, and replenishment robots (012) responsible for logistical support, such as transferring goods from the station storage unit (02) to vending robots (011) and redistributing inventory between robots. The vending robot (011) is equipped with a primary storage unit (031) that holds items available for purchase, while the replenishment robot (012) features a secondary storage unit (032) designed for transporting and temporarily storing inventory.

It should be noted that the vending robots (011) and replenishment robots (012) may have either identical or customized designs, depending on their functional requirements. For example, the replenishment robot (012) may undergo structural optimizations to facilitate bulk loading and unloading, improving replenishment efficiency.

In some embodiments, the loading capacity of the primary storage unit (031) and the secondary storage unit (032) may be either equal or different. For instance, the primary storage unit (031) may have a lower loading capacity than the secondary storage unit (032), allowing the vending robot (011) to maintain a lightweight inventory, thereby enhancing its mobility and operational efficiency.

When a user initiates an order request, the scheduling unit selects a target vending robot (011) based on the user's delivery location and the requested item, directing it to deliver the item to the specified location. To facilitate the vending robot (011) maintains sufficient stock, the scheduling unit also dispatches a replenishment robot (012) to the station storage unit (02) to collect replenishment items. These items are temporarily stored in the secondary storage unit (032) of the replenishment robot (012) before being transferred, either partially or entirely, to the primary storage unit (031) of the vending robot (011), thereby completing the inventory replenishment process.

It should be understood that this embodiment establishes a coordinated network between vending robots (011) and replenishment robots (012). The vending robots (011) function as stationary sales nodes, while the replenishment robots (012) serve as mobile replenishment nodes. Through specialized division of labour, this system prevents service robots (01) from experiencing decreased efficiency due to handling every stage of the retail process. By utilizing replenishment robots (012) for large-scale transportation and inventory replenishment, the system maintains dynamic inventory stability across different areas at lower logistics costs.

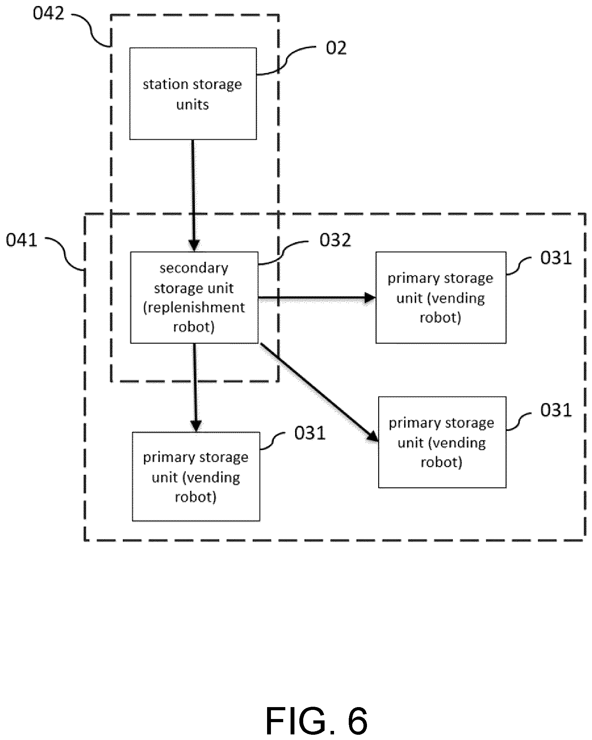

In some embodiments, as illustrated in FIG. 6, each vending robot (011) has at least one corresponding replenishment robot (012) within its first replenishment range (041), while each replenishment robot (012) has at least one corresponding station storage unit (02) within its second replenishment range (042).

Specifically, within each vending robot's (011) first replenishment range (041), at least one replenishment robot (012) is deployed, creating a primary replenishment link between sales nodes and replenishment nodes. Additionally, within each replenishment robot's (012) second replenishment range (042), at least one station storage unit (02) is deployed, forming a secondary replenishment link between replenishment nodes and warehouse nodes. As illustrated in FIG. 6, by implementing a tiered replenishment network for facilitating the flow of the items/goods/products, the system of the present invention facilitates strict control over replenishment response times between nodes, thereby enhancing delivery responsiveness despite limited storage capacity.

The first replenishment range (041) is defined as an area centered around either the vending robot (011) or its patrol range. The exact range can be flexibly adjusted based on factors such as the expected replenishment response time and the robot's movement speed. For example, a first replenishment range (041) may be set within a 2-kilometer radius.

Similarly, the second replenishment range (042) is an area centered around either the replenishment robot (012) or its patrol range. The specific size of this range depends on factors such as the density of station storage units (02), product variety and quantity, the movement speed of replenishment robots (012), and transportation costs. This range is also flexibly adjustable and may, for example, be set at a 3-kilometer radius.

In some embodiments, the second replenishment range (042) is larger than the first replenishment range (041), allowing replenishment robots (012) to cover a broader area while ensuring frequent and efficient resupply for vending robots (011).

In some embodiments, the vending robot (011) functions as a first-type service robot, while the replenishment robot (012) functions as a second-type service robot. The scheduling unit is further configured to initiate the replenishment process when the inventory of a vending robot (011) falls below a second inventory threshold. In such cases, the scheduling unit dispatches a replenishment robot (012) from the first replenishment range (041) to meet the vending robot (011) and transfer some or all of the inventory from the secondary storage unit (032) to the primary storage unit (031).

The second inventory threshold serves as a trigger for the replenishment process. This threshold can be set separately for different product categories based on factors such as historical sales data, stockout risks (i.e., the risk of running out of inventory), and replenishment cycles. For example, the second inventory threshold for lime-flavored potato chips may be set at five units, while for stomach medicine, it may be set at two units.

Specifically, when the inventory of a vending robot (011) falls below the second inventory threshold, the system determines that the vending robot (011) is at risk of stock depletion and triggers the replenishment process. The scheduling unit scans the inventory status of all secondary storage units (032) of replenishment robots (012) within the first replenishment range (041) of the vending robot (011). The system prioritizes the replenishment robot (012) with sufficient stock that is closest to the vending robot (011). The scheduling unit then synchronizes the meet path for both robots and transfers a preset proportion of goods (e.g., replenishing up to 120% of the second inventory threshold) from the secondary storage unit (032) to the primary storage unit (031). This approach effectively prevents stock shortages due to low inventory while also maximizing storage space utilization and minimizing excessive stock accumulation.

Furthermore, if a vending robot (011) experiences a critical inventory shortage, the scheduling unit can simultaneously dispatch multiple replenishment robots (012) or other vending robots (011) to perform collaborative replenishment. This multi-robot emergency replenishment arrangement facilitates rapid response to urgent stock shortages, improving delivery efficiency. For instance, multiple robots can each carry part of the needed stock to a designated meeting point, where inventory is consolidated without disrupting the user experience.

As an example, the vending robot (011) functions as a first-type service robot, while the replenishment robot (012) functions as a second-type service robot. The scheduling unit is further configured to initiate a supplementary inventory transfer process when the requested item quantity exceeds the available stock in the target vending robot (011). In such cases, the scheduling unit directs replenishment robots (012) and/or other vending robots (011) within the first replenishment range (041) to meet with the target vending robot (011) and transfer a portion or all of the required inventory into the primary storage unit (031) of the target vending robot (011).

Specifically, if a user's order request requires more stock than what the target vending robot (011) currently holds, the scheduling unit initiates an emergency replenishment protocol. It dispatches replenishment robots (012) and/or other vending robots (011) within the first replenishment range (041) to rapidly meet with the target vending robot (011) and transfer the necessary inventory to its primary storage unit (031). This facilitates that the system aggregates all available inventory in the region to fulfill large or unexpected order surges, thereby preventing service disruptions caused by stock shortages.

In some embodiments, the system of the present invention is operable to determine the number of service robots (01) needed for replenishment based on the difference between the requested item quantity and the available inventory in the target vending robot (011). The system prioritizes dispatching replenishment robots (012) first. If the total available inventory of replenishment robots (012) within the first replenishment range (041) is still insufficient, the system is then operable to dispatch idle vending robots (011) with no active delivery tasks until the inventory gap is resolved.

In some embodiments, after transferring part or all of the corresponding goods from the replenishment robot (012) and/or other vending robots (011) to the primary storage unit (031) of the target vending robot (011), the system further selects a target replenishment robot (012) from the first replenishment range (041) of the vending robot

(011). The scheduling unit then directs the target replenishment robot (012) to retrieve the corresponding goods from the station storage unit (02) and transfer them to the target vending robot (011), the replenishment robot (012) involved in the initial transfer, and/or other vending robots (011) that participated in the process.

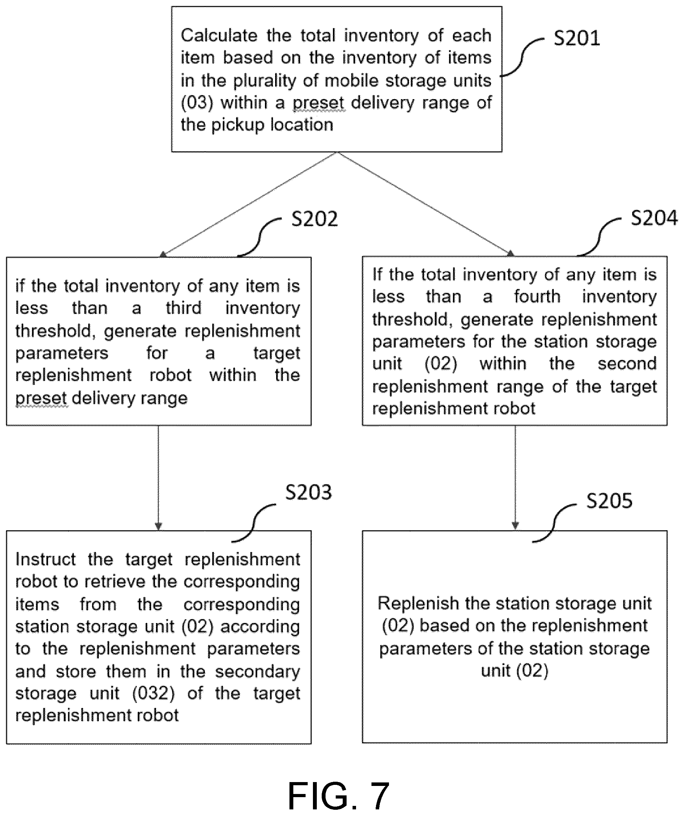

In some embodiments, as illustrated in FIG. 7, the scheduling unit is further configured to analyze the total inventory of goods stored in multiple mobile storage units (03) within a preset delivery range centered on the delivery location (the step S201). If the total inventory of any specific product falls below the third inventory threshold, the system generates replenishment parameters for a target replenishment robot (012) within the preset delivery range (the step S202). These replenishment parameters include product details and quantity information. The scheduling unit then dispatches the target replenishment robot (012) to retrieve the corresponding goods from the station storage unit (02) and store them in its secondary storage unit (032) (the step S203).

The third inventory threshold acts as a trigger for the replenishment process of the replenishment robot (012). This threshold is dynamically set for different product categories based on factors such as historical sales data, past stockout risks, and replenishment cycles, and its specific value is not limited to any fixed amount.

The preset delivery range refers to a geographical area defined around the delivery location, such as a 5-kilometer radius. The specific range value can be flexibly adjusted based on expected replenishment response times and robot movement speeds and is not restricted to a fixed size.

Specifically, the scheduling unit defines the preset delivery range around the delivery location and aggregates inventory data from all vending robots (011) within this range. If the total inventory of a particular product falls below the third inventory threshold, the system identifies the product as being at risk of stockout and triggers the replenishment process for replenishment robots (012). The scheduling unit then selects a target replenishment robot (012) from multiple available replenishment robots (012) within the preset delivery range, prioritizing either the one with the lowest load ratio or the one closest to the station storage unit (02). The system then generates replenishment parameters based on the product information of the stockout-risk goods (i.e., items/goods/products running low in inventory) and directs the target replenishment robot (012) to travel to the designated station storage unit (02) for replenishment.

Furthermore, upon retrieving the stockout-risk goods, the target replenishment robot (012) returns to its patrol area but does not immediately transfer the replenished inventory to vending robots (011). Instead, it temporarily stores the goods in its secondary storage unit (032) while awaiting further dispatch instructions from the scheduling unit.

It should be understood that regional inventory monitoring is triggered based on user order requests. The monitoring area and frequency can be dynamically adjusted according to real-time orders, allowing the system to focus on high-demand regions. In areas with higher order volumes, inventory monitoring occurs more frequently to minimize stockout risks, while low-demand areas are monitored less frequently to avoid unnecessary system resource usage.

Furthermore, replenished goods are not immediately allocated to vending robots (011) but are temporarily stored in replenishment robots (012). This facilitates that vending robots (011) operate on an on-demand replenishment mechanism, preventing excessive stockpiling that could lead to resource waste. By leveraging the storage capacity of replenishment robots (012), a buffer layer is created between station storage units (02) and vending robots (011). This approach reduces the logistics costs associated with frequent, small-batch replenishment while providing the scheduling unit with greater flexibility in resource allocation, ultimately minimizing inter-level transfer delays.

In some embodiments, as illustrated in FIG. 7, the scheduling unit is further configured to trigger the replenishment process at station storage units (02) when the total inventory of any product falls below the fourth inventory threshold, where the fourth inventory threshold is set higher than the third inventory threshold (the step S204). The system then generates replenishment parameters for station storage units (02) within the second replenishment range (042) of the target replenishment robot (012). Based on these replenishment parameters, the scheduling unit replenishes the station storage units (02) accordingly (the step S205).

The fourth inventory threshold serves as a trigger for the replenishment process at station storage units (02). It is dynamically set for different product categories based on factors such as historical sales data, previous stockout risks, and replenishment cycles.

Specifically, if the total inventory of a product falls below the fourth inventory threshold (e.g., only five units remain within an entire region), the system predicts an impending stock depletion and anticipates a large-scale replenishment operation. This situation may lead to insufficient reserves at station storage units (02), thereby triggering the replenishment process for station storage units (02). The system then calculates the required product details and quantities for replenishment and initiates procurement orders from suppliers or transfers inventory from higher-level storage units (031) or other station storage units (02) to prevent disruptions in the supply chain.

In some embodiments, the vending robot (011) functions as a stationary sales node, designed to provide direct item delivery services to users. Its primary storage unit (031) is optimized for storing high-frequency, high-demand, or single-category products, thereby reducing category diversity in favor of maximizing single-product inventory capacity. This extends the replenishment cycle and reduces user wait times.

Correspondingly, the replenishment robot (012) functions as a mobile replenishment node, responsible for transferring inventory to vending robots (011). Its secondary storage unit (032) is designed for multi-category mixed storage, accommodating low-demand products not stocked in vending robots (011) while also maintaining a buffer inventory of high-demand products. This enables flexible replenishment based on the needs of different vending robots (011) and varying order demands, including sudden large-volume or multi-category orders. By ensuring inventory redundancy, the system prevents delivery delays caused by missing product categories.

This approach enables the specialized division of labour among service robots (01) while integrating differentiated inventory management, thereby establishing a coordinated network between vending robots (011) and replenishment robots (012). By preventing service robots (01) from engaging in every stage of the retail process, the system enhances operational efficiency. Additionally, replenishment robots (012) facilitate large-scale transportation and replenishment, dynamically stabilizing regional inventory at a lower logistics cost.

Furthermore, the primary storage unit (031) replenishes its inventory on demand, based on its own consumption levels, ensuring that vending robots (011) maintain a lightweight inventory. The secondary storage unit (032) consolidates replenishment efforts based on regional inventory consumption and temporarily stores inventory to respond to vending robot (011) replenishment requests and sudden demands. This structure provides the scheduling unit with greater flexibility in resource allocation, reducing cross-tier inventory transfer delays and achieving an inventory buffering hierarchy. The station storage unit (02) performs bulk replenishment based on regional inventory risk forecasts. For example, replenishment of a station storage unit (02) may be carried out periodically by replenishment trucks that are arranged to transport goods from regional inventory storage facilities. These replenishment trucks circulate among multiple station storage units (02) deployed across various locations, thereby supporting the operation of retail systems in different regions. In some embodiments, the replenishment trucks are unmanned, autonomous vehicles operating without human drivers. By implementing distinct replenishment triggers for different storage units, the system avoids frequent, small-batch, and unnecessary replenishment operations, thereby reducing logistics costs and enabling flexible scheduling of robot and inventory resources.

In some embodiments, the scheduling unit is further configured to continuously monitor the number of replenishment robots (012) within the first replenishment range (041) of each vending robot (011). If the number of replenishment robots (012) falls below a preset threshold, the system expands the first replenishment range (041) to a third replenishment range.

Specifically, the system continuously monitors the number of replenishment robots (012) within the first replenishment range (041) of each vending robot (011). When replenishment robots (012) are temporarily unavailable due to replenishment trips to station storage units (02), system faults, or other reasons, local replenishment resources become insufficient. If the number of replenishment robots (012) falls below the preset threshold, the system identifies a replenishment resource shortage risk in that area and automatically expands the replenishment range from the first replenishment range (041) to the third replenishment range. This expansion incorporates additional replenishment robots (012) and vending robots (011) from surrounding areas, allowing the system to quickly mitigate inventory shortages, facilitate the continuous operation of vending robots (011), and meet customer demands promptly.

In some embodiments, after expanding the first replenishment range (041) to the third replenishment range, the system may also designate the boundary area between the first and third replenishment ranges as a target patrol area. Based on this target patrol area, the system adjusts the patrol paths of idle replenishment robots (012) within the third replenishment range, ensuring that idle replenishment robots (012) pass through the target patrol area and/or remain in that area for a preset duration.

In some embodiments, if the number of replenishment robots (012) exceeds the preset threshold, the system automatically shrinks the third replenishment range back to the first replenishment range (041). This prevents long-term cross-zone transportation from negatively impacting the response speed of adjacent regions.

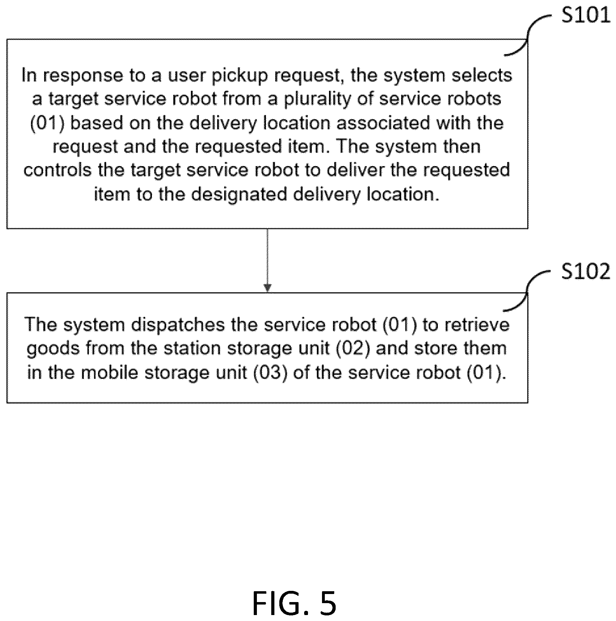

In some embodiments, please refer to FIG. 5, which is a schematic flowchart of a retail method provided in an embodiment of the present invention. As shown in FIG. 5, the present invention further provides a retail method applicable to the retail system described in any embodiment of this application. **The** method comprises steps S101 to S102:

S101: **In** response to a user order request, the system selects a target service robot from a plurality of service robots (01) based on the delivery location and the item to be delivered, and controls the target service robot to deliver the item to the delivery location.

S102: **The** system dispatches a service robot (01) to retrieve goods from a station storage unit (02) and store them in the mobile storage unit (03) of the service robot (01).

Specifically, upon receiving a user order request, the system analyzes the delivery location coordinates and the corresponding product information of the requested item. Using a predefined algorithm, the system selects the optimal target service robot from the robot fleet, prioritizing robots that are closest to the delivery location and have inventory matching the requested item. The selected service robot (01) is then deployed to deliver the designated item to the delivery location.

On this basis, the system continuously manages warehouse resources. **If** the inventory in the mobile storage unit (03) becomes insufficient, the scheduling unit directs the service robot (01) to return to the station storage unit (02) for replenishment, forming an adaptive replenishment cycle between the station storage unit (02) and the mobile storage unit (03) to maintain dynamic inventory balance.

In some embodiments, each service robot (01) moves within a predefined patrol range. The method further includes: obtaining historical sales data and/or human traffic data within the patrol range of each service robot (01). If the historical sales data exceed a preset sales volume and/or the human traffic data exceed a preset threshold, the corresponding area is designated as a target patrol area. Based on the target patrol area, the system updates the patrol route of the service robot (01) to facilitate that the robot passes through or remains in the target patrol area for a preset duration.

In some embodiments, the method further includes: if the target service robot arrives at the delivery location but fails to identify the intended recipient of the requested item, the system searches for and connects to at least one monitoring device in the corresponding delivery area. Based on images from at least one monitoring device, the system selects a temporary storage location for the goods and controls the target service robot to place the requested item at the selected storage position.

In some embodiments, the method of the present invention further comprises monitoring the receipt status of the requested item based on monitoring images captured by at least one monitoring device.

In some embodiments, the service robot (01) is equipped with a vision acquisition module, which is used to capture environmental images of the robot's current location (e.g., in real-time), such as the surrounding walls, corridors, doors and floors. The method further includes: before the target service robot delivers the requested item to the user, recognizing and verifying the delivery location and/or the user's identity based on the environmental images; and before a service robot (01) transfers goods to another service robot (01), recognizing and verifying the identity of the receiving service robot (01) based on the environmental images.

In some embodiments, the method further includes: monitoring whether the service robot's (01) current location has any hygiene issues (e.g., trash on the floor) and/or safety risks (e.g., exposed or damaged electrical cables) based on the environmental images. If any hygiene or safety concerns are detected, the system automatically sends an alert to the regulatory personnel responsible for that location. This enables proactive management of the premises, addressing potential issues before they are noticed by residents, thereby enhancing overall environmental safety and cleanliness. In some embodiments, the method further includes identifying human traffic data based on environmental images.

In some embodiments, the storage unit also includes an instant storage unit, and the method further includes: controlling the target service robot to retrieve the requested item from the instant storage unit and deliver it to the delivery location.

In some embodiments, the retail system also includes an order placement program running on a terminal device device. The order placement program includes a shopping interface and an order interface, where the shopping interface displays a list of available products for sale, and the order interface allows users to complete the order checkout process and enter delivery location information. The method further includes: generating the order interface based on the products selected by the user from the shopping list interface; retrieving the delivery location information entered by the user in the order interface; determining the requested item information based on the products the user has checked out; and generating a user order request based on the delivery location information and the requested item information.

In some embodiments, the method further includes: analyzing the total inventory of goods stored in multiple mobile storage units (03) within a preset delivery range centered on the delivery location. If the total inventory of a product exceeds the first inventory threshold, the system identifies it as a recommended product. The recommended product is prioritized for display in the shopping list interface, and/or a discounted price is set based on predefined discount rules to encourage sales.

In some embodiments, the method further includes retrieving the delivery location information entered by the user in the order interface and determining the requested item information based on the products checked out by the user in the order interface. The system then generates a user order request based on the delivery location information and the requested item information.

In some embodiments, the method further includes selecting a first-type service robot and a second-type service robot from a plurality of service robots (01). The mobile storage unit (03) of the first-type service robot is designated for storing a single product category, while the mobile storage unit (03) of the second-type service robot is configured to store multiple product categories.

In some embodiments, the service robots (01) comprise vending robots (011) (also known as sales robots) and replenishment robots (012), while the mobile storage units (03) include primary storage units (031) and secondary storage units (032). The primary storage unit (031) is located inside the vending robot (011), while the secondary storage unit (032) is located inside the replenishment robot (012). The method further includes: in response to a user order request, selecting a target vending robot (011) from a plurality of vending robots (011) based on the delivery location and the requested item, and controlling the target vending robot (011) to deliver the requested item to the delivery location. The method also includes dispatching a replenishment robot (012) to retrieve goods from a station storage unit (02) and store them in its secondary storage unit (032). Additionally, the system transfers part or all of the goods stored in the secondary storage unit (032) of the replenishment robot (012) to the primary storage unit (031) of the vending robot (011) as needed.

In some embodiments, the vending robot (011) functions as a first-type service robot, while the replenishment robot (012) functions as a second-type service robot. The method further includes: if the inventory of a vending robot (011) falls below the second inventory threshold, the system dispatches a replenishment robot (012) within the first replenishment range (041) of the vending robot (011) to meet and transfer part or all of the goods stored in the secondary storage unit (032) to the corresponding primary storage unit (031) of the vending robot (011). Additionally, if the quantity of the requested item exceeds the current inventory of the target vending robot (011), the system calls a replenishment robot (012) and/or other available vending robots (011) within the first replenishment range (041) of the target vending robot (011) to transfer part or all of the corresponding goods to the primary storage unit (031) of the target vending robot (011).

In some embodiments, the method further includes calculating the total inventory of each product stored across multiple mobile storage units (03) within the preset delivery range of the delivery location. If the total inventory of any product falls below the third inventory threshold, the system generates replenishment parameters for a target replenishment robot within the preset delivery range. These replenishment parameters include product information and quantity. The system then dispatches the target replenishment robot to retrieve the corresponding products from a station storage unit (02) and store them in its secondary storage unit (032).

In some embodiments, the method further includes: if the total inventory of any product falls below the fourth inventory threshold, the system generates replenishment parameters for the station storage units (02) within the second replenishment range (042) of the target replenishment robot. Here, the fourth inventory threshold is set higher than the third inventory threshold. Based on these replenishment parameters, the system initiates a replenishment process for the corresponding station storage unit (02).

In some embodiments, the method further includes continuously monitoring the number of replenishment robots (012) within the first replenishment range (041) of each vending robot (011). If the number of replenishment robots (012) falls below a preset threshold, the system expands the first replenishment range (041) to the third replenishment range to include additional replenishment robots (012) and vending robots (011), ensuring efficient inventory allocation and replenishment operations.

For example, the retail method of the present invention is configured to implement the scheduling functions of the scheduling unit described in any embodiment of the retail system provided in this application. Therefore, detailed descriptions of redundant functionalities are omitted.

Various aspects of the system of the present invention could be facilitated by artificial intelligence technologies. For example, in some embodiments, the service robot (01) is configured to comprise an artificial intelligence module configured to process instructions sent by the scheduling unit and to autonomously navigate the service robot (01) within its designated service area. In some embodiments, the scheduling unit itself is configured to incorporate an AI-based model (e.g., for robot assignment) that receives and analyses order requests, and dynamically assigns each request to a suitable service robot (01) as recommended by the AI-based model. Additionally, the scheduling unit may comprise other AI models (e.g., for inventory estimation) that continuously monitor inventory levels across station storage units (02) and service robots (01), enabling proactive inventory management and optimization of inventory flow throughout the system.

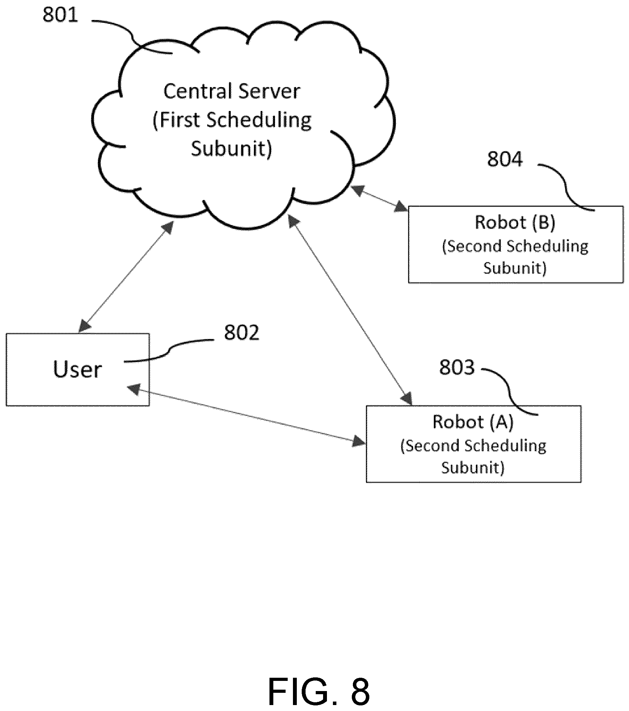

As shown in FIG.8, in some embodiments of the present invention, the scheduling unit comprises a first scheduling subunit located on a central server 801 (e.g., a cloud-based server) and a second scheduling subunit located on a selected robot (e.g., a target service robot (e.g., 803, 804)) designated for a specific task (e.g., delivering an item sold to a user at specific unit in a building), wherein the first scheduling subunit and the second scheduling subunit are arranged to be in data communication. The first scheduling subunit is configured to generate and transmit a task route (e.g., a delivery route) to the selected robot, while the second scheduling subunit is configured to receive the task route and control the selected robot to navigate along the task route.

In this arrangement, the first scheduling subunit is operable to receive user requests (e.g., a product purchase order made on the user's mobile device), analyse the request (e.g., checking the inventory), select an appropriate service robot to deliver the product (i.e., the selected robot), generate a corresponding task route (e.g., based on a BIM model of the relevant building), and transmit the task route to the selected robot. In some embodiments, the selected robot may also be preloaded with the same BIM model of the building. The second scheduling subunit, embedded within the robot, receives and interprets the task route, and then autonomously controls the robot's movement along the specified path.

The selected robot, equipped with communication modules (e.g., a primary and a secondary communication module), maintains continuous data connectivity with the first scheduling subunit. For example, the second scheduling subunit of the selected robot may be configured to periodically report its current location to the first scheduling subunit, such as by actively transmitting location data at defined intervals. In addition, the first scheduling subunit may be configured to proactively query the selected robot for its location along the task route. This dual communication structure is designed to enable centralized monitoring of the real-time positions of the selected robot and other robots within the system, allowing the first scheduling subunit to dynamically adjust and optimize a robot's task route in response to changing user demands, potentially through the use of an AI model specialized in the holistic coordination and management of the robot fleet (e.g., task routes).

For example, while a selected robot is navigating along its assigned task route to deliver a purchased item, the first scheduling subunit may receive a new purchase request from another user located along or near the same route. In such a scenario, the first scheduling subunit (through its AI model) can evaluate the suitability of this selected robot to fulfill the new request and, if appropriate, update its task route accordingly. The updated task route is then transmitted to the selected robot. Upon receiving the update, the second scheduling subunit of the robot verifies the compatibility of the revised task route with its current status and navigation context. If the updated route is deemed valid, the selected robot transmits a confirmation signal back to the first scheduling subunit to acknowledge acceptance and proceed with the updated delivery task.

In other words, the first scheduling subunit is purposefully designed to manage the overall coordination and planning of the system, including robot deployment, order request processing, payment and transaction, inventory monitoring, replenishment scheduling, and other related tasks. It may be supported by a first artificial intelligence model that is continuously trained and refined to enable dynamic optimization of task planning and system-wide operations.

In contrast, the second scheduling subunit, which is embedded within and operates locally on each robot, is configured to dynamically and promptly optimize the robot's manoeuvring and navigation in response to real-time environmental conditions, such as pedestrian movement and unexpected obstructions along the path (e.g., misplaced bicycles or furniture outside an apartment unit). While following a task route planned and transmitted by the first scheduling subunit, the second scheduling subunit is further configured to receive and analyze environmental data in real time (e.g., environmental imagery, elevator availability, or access control status such as electronic locks). Based on this analysis, it generates adaptive navigation adjustments to refine the robot's movement and ensure smooth task execution.

For example, when the selected robot approaches an elevator along its assigned task route and detects heavy pedestrian traffic in the vicinity (e.g., during peak hours) through real-time environmental imagery captured by the visual acquisition module, the selected robot does not relay this information to the first scheduling subunit for centralized processing. Instead, the second scheduling subunit is configured to autonomously assess the local condition (e.g., crowding near the elevator) and, if the delivery schedule permits, instruct the robot to temporarily pause.

In another scenario, rather than continuously triggering audible alerts to request that pedestrians make way, which could cause annoyance and reduce public acceptance of the retail system, the second scheduling subunit of the selected robot is configured to analyze whether a viable path or sufficient space is available for it to enter the elevator or proceed through a partially obstructed corridor. This determination may be made based on real-time visual data or other sensing technologies such as lidar (i.e., laser radar). This localized decision-making capability enables the robot to navigate efficiently and respectfully within shared environments, minimizing disruption while maintaining overall task timeliness and delivery accuracy.

Furthermore, in certain residential complexes or office buildings equipped with security access controls (e.g., electronic door locks), the second scheduling subunit of the selected robot is configured to perform authentication procedures with the corresponding authorization units installed at the access points. These authorization units may store pre-registered identification information uniquely associated with each robot, facilitating verification. In scenarios where heightened security measures are required, the first scheduling subunit, upon generating the task route, is further configured to transmit time-sensitive authorization credentials for the selected robot. These credentials grant the robot access to pass through designated security checkpoints within a specified time window, thereby facilitating both secure and timely execution of the delivery task. In some embodiments, instead of transmitting credentials in advance, the selected robot may be configured to request and receive a one-time password (OTP) or verification code upon approaching a security access control point. This code can then be used by the robot to gain access, allowing for secure entry while further minimizing the exposure of long-term credentials and enhancing access control flexibility.

In some embodiments, the second scheduling subunit is powered by a second artificial intelligence model that is continuously trained and refined to guide the robot in responding to real-time environmental conditions and dynamic demands encountered along the task route. This arrangement allows the robot to navigate efficiently while minimizing disruption to nearby pedestrians and users. By decentralizing real-time decision-making, the system of the present invention significantly reduces reliance on the central server (i.e., the first scheduling subunit) for handling unexpected, localized changes that may occur during task execution, especially those requiring immediate response. This is advantageous in scenarios where network latency or instability could hinder the timeliness of centralized processing. Through localized analysis and autonomous adjustment, the robot is capable of making prompt, context-aware navigation decisions. As a result, the system of the present invention achieves the technical effect of performing efficient delivery operations, often without drawing attention from or causing inconvenience to nearby residents or pedestrians within the premises.

In some embodiments, the second scheduling subunit is further configured to receive instructions directly from a user, analyze the content of the instruction, and guide the selected service robot to respond accordingly. For example, after receiving a delivery, a user may realize that additional items are needed (e.g., salt) and can issue a verbal query directly to the robot, such as "Hi, do you have salt?" Upon receiving the voice command, the second scheduling subunit is operable to check the inventory stored within the selected robot. If the requested item (e.g., salt) is available, the second scheduling subunit is configured to autonomously control the robot to dispense the item immediately to the user, thereby enhancing user convenience by supporting supplemental, on-site purchases that were not included in the original order.

Additionally, the second scheduling subunit may update the purchase information and transmit it to the first scheduling subunit, which is responsible for handling other aspects of the transaction, such as processing payment and updating system-wide inventory records.

In scenarios where the requested item is not available in the selected robot's inventory, the second scheduling subunit is configured to forward the request to the first scheduling subunit. The first scheduling subunit may then identify another suitable robot that carries the requested item and initiate a new delivery task to fulfill the user's supplemental request. For example, the selected robot may verbally inform the user that the item is currently unavailable but that another robot has been dispatched to complete the delivery. In addition, a notification may be sent to the user's mobile device to confirm that a second robot is en route with the requested item (e.g., salt), thereby ensuring that the user remains informed throughout the process.

In embodiments where the scheduling unit comprises both a first scheduling subunit (located in a central server) and a second scheduling subunit (located in each robot), the first and second artificial intelligence models can be independently trained, developed, and optimized to address their respective operational focuses, for example, system-wide task optimization and localized, real-time responsiveness. This distributed architecture enables the retail system of the present invention to take advantage of model specialization, allowing the first scheduling subunit to handle macro-level planning (e.g., task allocation, inventory management, and routing optimization), while the second scheduling subunit focuses on micro-level adaptations (e.g., obstacle avoidance, user interaction, and route refinement).

Such separation not only enhances the overall efficiency and adaptability of the retail system but also reduces the system's dependence on continuous communication between the mobile robots and the central server. This can significantly alleviate bandwidth usage and minimize the computational burden on centralized infrastructure, thereby lowering the operational cost and improving the long-term sustainability and scalability of the retail system deployment.

In summary, the present invention provides an intelligent retail system that integrates service robots (01), multi-tier storage units, and a dynamic scheduling unit to optimize retail operations, inventory management, and last-mile delivery. By leveraging these technical features, the system of the present invention facilitates efficiency in inventory allocation, dynamic replenishment, delivery optimization, and user convenience, making it a highly adaptable solution for an intelligent retail system or mobile supermarket.

As described above, a technical advantage of the invention is its multi-tier storage system, which improves inventory management by introducing a buffered storage hierarchy. The system of the present invention comprises station storage units (02), mobile storage units (03), and instant storage units, each playing a distinct role in optimizing storage utilization. The primary storage units (031) in vending robots (011) maintain lightweight, high-frequency stock for efficient on-demand delivery, while secondary storage units (032) in replenishment robots (012) act as mobile replenishment hubs. These arrangements reduce the frequency of direct restocking from station storage units (02) and, at least to some extent, facilitates real-time inventory balance, alleviating unnecessary transportation and stockouts.

The dynamic scheduling and replenishment arrangements of the present invention further enhances inventory stability by monitoring real-time stock levels and intelligently dispatching replenishment robots (012) when stock drops below preset thresholds. The replenishment range adapts dynamically; when available replenishment robots in the first replenishment range are insufficient, the system expands to a third replenishment range to help maintain inventory sufficiency. Unlike conventional rigid replenishment methods, the present system prevents excessive stockpiling by temporarily storing excess inventory in replenishment robots until a vending robot requires restocking, ensuring an adaptive and cost-efficient replenishment cycle.

Another advantage of the system is its intelligent product allocation and demand-based pricing adjustment. The system applies dynamic discounts based on inventory levels and robot proximity to influence customer purchasing behavior. As described earlier, for example, if the inventory of Sprite is running low while Coca-Cola remains overstocked, the system applies a discount to Coca-Cola, encouraging users to opt for it instead, thereby preventing shortages and balancing inventory. Additionally, if a user is near robots carrying only Sprite while robots farther away stock Coca-Cola, the system offers a limited-time discount on Sprite, directing demand toward locally available stock. This method not only reduces unnecessary long-distance deliveries but also optimizes resource utilization and enhances customer satisfaction.

The invention also introduces an automated last-mile delivery system that allows users to request a service robot (01) to retrieve items from instant storage units, such as self-service parcel lockers, vending lockers, or takeaway lockers. Such arrangement extends beyond traditional mobile supermarkets, as the system can facilitate deliveries not only for products within its retail network but also for third-party orders, such as food deliveries from external providers. This hybrid retail and delivery model enhances service flexibility and convenience for users.

Furthermore, the system features adaptive routing based on real-time sales data and pedestrian movement patterns. Each service robot (01) operates within a predefined patrol range, and the scheduling unit continuously analyzes historical sales data and pedestrian flow to dynamically update patrol paths. If an area experiences higher sales or increased pedestrian traffic, the system prioritizes that area by redirecting service robots (01), thereby maximizing product exposure and boosting sales efficiency. Moreover, the system intelligently adjusts robot movement to avoid congested areas, ensuring that deliveries remain efficient and free from unnecessary delays.

To further improve logistics efficiency, the present invention allows autonomous item transfers between service robots (01). Through robotic arms or mechanical interfaces, robots can redistribute inventory among themselves, eliminating the need for centralized intervention. This capability enables on-the-go inventory reallocation, preventing localized stockouts while reducing the need for excessive returns to station storage units (02).

The system also introduces automated environmental monitoring and proactive safety alerts. Each service robot (01) is equipped with a visual acquisition module that continuously monitors its surroundings. If hygiene issues such as trash accumulation or safety risks such as exposed electrical cables are detected, the system automatically notifies regulatory personnel, attempting to have the potential hazards addressed before they are noticed by residents.

To further enhance delivery security and accuracy, the system incorporates intelligent verification mechanisms. Before delivering an item, the service robot (01) verifies the delivery location and/or user identity based on environmental images, QR codes, or facial recognition. Similarly, before transferring goods between robots, the system validates the recipient robot's identity to prevent unauthorized handovers or misallocation.

The adaptive replenishment scaling model further enhances inventory reliability by continuously monitoring real-time stock levels across multiple zones. If an item's inventory falls below a critical threshold, the system triggers large-scale replenishment to prevent supply chain disruptions. Instead of immediately transferring replenished goods to vending robots, replenishment robots (012) temporarily store the products, creating a flexible buffer that reduces unnecessary inter-zone transport while maintaining balanced inventory levels.

To facilitate uninterrupted communication and reliable system operation, the invention employs multiple communication modules. A primary communication module (Wi-Fi) enables cloud-based scheduling, while a secondary module (Bluetooth or ad-hoc networks) facilitates direct robot-to-robot coordination. Additionally, a tertiary module (Cellular 4G/5G) facilitates long-range communication. If one module fails, the system automatically switches to an alternative, maintaining continuous service without disruptions.

By integrating multi-tier storage, dynamic scheduling, autonomous item transfer, intelligent routing, and real-time monitoring, the present invention revolutionizes unmanned retail and autonomous delivery systems. These innovations collectively enhance inventory efficiency, minimize logistics costs, improve delivery responsiveness, reduce operational waste, and provide a highly flexible and scalable retail solution. The system, at least to some extent, achieves a balance between product variety, inventory efficiency, and real-time delivery, ultimately enhancing customer satisfaction and operational reliability in diverse retail environments.

It should be further appreciated by the person skilled in the art that variations and combinations of features described above, not being alternatives or substitutes, may be combined to form yet further embodiments falling within the intended scope of the invention. As would be understood by a person skilled in the art, each embodiment, may be used in combination with other embodiment or several embodiments.
The following clauses, which form part of the description, provide general expressions of the disclosure herein:
A1. A retail system, wherein the retail system comprises a plurality of service robots (01), a plurality of storage units, and a scheduling unit;
   the storage units comprise station storage units (02) and mobile storage units (03); the station storage units (02) are arranged at predetermined locations, the mobile storage units (03) are disposed inside the service robots (01), and the loading capacity of the station storage units (02) is greater than the loading capacity of the mobile storage units (03);
   the scheduling unit is further configured to, in response to an order request from a user, select a target service robot from the plurality of service robots (01) based on a delivery location corresponding to the order request and an item to be delivered, and control the target service robot to deliver the item to the delivery location;
   the scheduling unit is configured to instruct the service robot (01) to retrieve an item from the station storage unit (02) and store the item in the mobile storage unit (03) of the service robot (01).
A2. The retail system according to Clause A1, wherein each service robot (01) moves within a predetermined patrol range; the scheduling unit is further configured to:
   acquire historical sales data and/or traffic data within the predetermined patrol range of each service robot (01);
   designate an area as a target patrol area when the historical sales data exceeds a preset sales threshold and/or the traffic data exceeds a preset traffic threshold;
   update the patrol route of the service robot (01) within the patrol range based on the target patrol area, so that the service robot (01) passes through the target patrol area and/or stays within the target patrol area for a predetermined duration.
A3. The retail system according to Clause A1, wherein the scheduling unit is further configured to:
   when the target service robot arrives at the delivery location and fails to identify a target user to receive the item to be delivered, search for and connect to at least one monitoring device within the area corresponding to the delivery location;
   select a temporary storage position for the item based on the monitoring image of at least one monitoring device, and control the target service robot to place the item to be delivered at the temporary storage position.
A4. The retail system according to Clause A3, wherein the scheduling unit is further configured to monitor the receipt status of the item to be delivered based on the monitoring image of at least one monitoring device.
A5. The retail system according to Clause A1, wherein the service robot (01) is provided with a visual acquisition module;
   the visual acquisition module is configured to capture environmental images of the location where the service robot (01) is situated;
   the scheduling unit is further configured to:
      before the target service robot delivers the item to be delivered to the user, identify and verify the delivery location and/or the user identity based on the environmental images;
      before the service robot (01) transfers items to another service robot (01), identify and verify the identity of the other service robot (01) based on the environmental images.
A6. The retail system according to Clause A5, wherein the scheduling unit is further configured to:
   monitor whether there are hygiene issues and/or safety risks at the location of the service robot (01) based on the environmental images;
   when hygiene issues and/or safety risks are detected, send an alert message to the supervisory personnel at the location.
A7. The retail system according to Clause A5, wherein the scheduling unit is further configured to recognize traffic data based on the environmental images.
A8. The retail system according to Clause A1, wherein the service robot (01) further comprises an item retrieval compartment, the item retrieval compartment being configured to display a preset quantity of some or all categories of items stored by the service robot (01), or the item retrieval compartment being configured to display the item to be delivered that the target service robot is delivering.
A9. The retail system according to Clause A1, wherein the storage units further comprise an instant storage unit; the scheduling unit is further configured to control the target service robot to retrieve the item to be delivered from the instant storage unit and deliver it to the delivery location.
A10. The retail system according to Clause A9, wherein the instant storage unit comprises at least one of a self-service storage locker, a self-service takeaway locker, a self-service parcel locker, a shared equipment locker, or a self-service vending locker.
A11. The retail system according to Clause A1, wherein the retail system further comprises an ordering program operating on a terminal device;
   the ordering program comprises a shopping interface and an order interface, wherein the shopping interface is configured to display a list of available items for sale to the user, allowing the user to select items from the list;
   the order interface is configured to complete the order checkout process and record the delivery location information.
A12. The retail system according to Clause A11, wherein the terminal device comprises a mobile phone, a tablet, a computer, a smart wearable device, a smart home device, or a smart in-vehicle device.
A13. The retail system according to Clause A11, wherein the scheduling unit is further configured to:
   obtain the delivery location information entered by the user in the order interface and determine the item to be delivered based on the items ordered and checked out in the order interface;
   generate an order request for the user based on the delivery location information and the item to be delivered.
A14. The retail system according to Clause A11, wherein the scheduling unit is further configured to:
   calculate the total inventory of each item based on the inventory of items in the plurality of mobile storage units (03) within a preset delivery range of the delivery location;
   determine the items with an inventory total greater than a first inventory threshold as recommended items;
   prioritize the display of the recommended items in the item list on the shopping interface; and/or set a discounted price for the recommended items based on preset discount rules.
A15. The retail system according to Clause A1, wherein the scheduling unit is further configured to:
   select a first-type service robot and a second-type service robot from the plurality of service robots (01), wherein the mobile storage unit (03) of the first-type service robot is configured to store any category of items, and the mobile storage unit (03) of the second-type service robot is configured to store multiple categories of items.
A16. The retail system according to Clause A1, wherein the service robot (01) is provided with a first communication module and a second communication module;
   the first communication module is configured for data exchange between the service robot (01) and the scheduling unit, and the second communication module is configured for data exchange between service robots (01).
A17. The retail system according to Clause A16, wherein the first communication module is a Wi-Fi module, and the second communication module is a Bluetooth module; or the first communication module is a Wi-Fi module, and the second communication module is a preset self-organizing network.
A18. The retail system according to any one of Clauses A1 to A17, wherein the service robot (01) comprises a vending robot (011) and a replenishment robot (012);
   the mobile storage unit (03) comprises a primary storage unit (031) and a secondary storage unit (032);
   the primary storage unit (031) is disposed inside the vending robot (011), and the secondary storage unit (032) is disposed inside the replenishment robot (012);
   the scheduling unit is configured to, in response to an order request from a user, select a target vending robot from the plurality of vending robots (011) based on the delivery location corresponding to the order request and the item to be delivered, and control the target vending robot to deliver the item to the delivery location;
   the scheduling unit is further configured to instruct the replenishment robot (012) to retrieve items from the station storage unit (02) and store them in the secondary storage unit (032) of the replenishment robot (012);
   instruct the replenishment robot (012) and the vending robot (011) to transfer part or all of the items from the secondary storage unit (032) to the primary storage unit (031).
A19. The retail system according to Clause A18, wherein at least one replenishment robot (012) corresponding to the vending robot (011) is provided within a first replenishment range (041) of the vending robot (011);
   at least one station storage unit (02) corresponding to the replenishment robot (012) is provided within a second replenishment range (042) of the replenishment robot (012).
A20. The retail system according to Clause A18, wherein the vending robot (011) is a first-type service robot, and the replenishment robot (012) is a second-type service robot; the scheduling unit is further configured to:
   when the inventory of items in the vending robot (011) falls below a second inventory threshold, instruct the replenishment robot (012) within the first replenishment range (041) of the vending robot (011) to meet with the vending robot (011) and transfer part or all of the items in the secondary storage unit (032) to the corresponding primary storage unit (031);
   when the quantity of the item to be delivered exceeds the inventory of the target vending robot, instruct the replenishment robot (012) and/or other vending robots (011) within the first replenishment range (041) of the vending robot (011) to meet with the vending robot (011) and transfer part or all of the corresponding items in the replenishment robot (012) and/or other vending robots (011) to the primary storage unit (031) of the target vending robot.
A21. The retail system according to Clause A18, wherein the scheduling unit is further configured to:
   calculate the total inventory of each item based on the inventory of items in the plurality of mobile storage units (03) within a preset delivery range of the delivery location;
   if the total inventory of any item is less than a third inventory threshold, generate replenishment parameters for a target replenishment robot within the preset delivery range, wherein the replenishment parameters include item information and item quantity;
   instruct the target replenishment robot to retrieve the corresponding items from the corresponding station storage unit (02) according to the replenishment parameters and store them in the secondary storage unit (032) of the target replenishment robot.
A22. The retail system according to Clause A21, wherein the scheduling unit is further configured to:
   if the total inventory of any item is less than a fourth inventory threshold, generate replenishment parameters for the station storage unit (02) within the second replenishment range (042) of the target replenishment robot, wherein the fourth inventory threshold is greater than the third inventory threshold;
   replenish the station storage unit (02) based on the replenishment parameters of the station storage unit (02).
A23. The retail system according to Clause A21, wherein the scheduling unit is further configured to:
   monitor in real time the number of replenishment robots (012) within the first replenishment range (041) of each vending robot (011);
   when the number of replenishment robots (012) falls below a preset quantity, expand the first replenishment range (041) to a third replenishment range.
A24. The retail system according to any one of the preceding clauses, wherein the scheduling unit comprises a first scheduling subunit located in a server, and a second scheduling subunit located in a selected robot;
   wherein the first scheduling subunit is configured to generate and transmit a task route to the selected robot, and the second scheduling subunit is configured to receive the task route from the first scheduling subunit and control the selected robot to navigate along the task route.
A25. The retail system according to Clause A24, wherein the second scheduling subunit is further configured to receive and analyze environmental factors surrounding the selected robot while navigating the task route, and to generate real-time navigation adjustments based on the environmental factors to guide the selected robot along the task route.
A26. The retail system according to Clause A25, wherein the analysis of the environmental factors is performed using a second artificial intelligence model.
A27. The retail system according to any one of Clauses A24 - A26, wherein the second scheduling subunit is further configured to receive an instruction directly from a user, analyze the instruction, and guide the selected service robot to respond accordingly.
A28. A retail method, wherein the method is applied to the retail system according to any one of Clauses A1 to A27, the method comprising:
   in response to an order request from a user, selecting a target service robot from the plurality of service robots (01) based on the delivery location corresponding to the order request and the item to be delivered, and controlling the target service robot to deliver the item to the delivery location;
   instructing the service robot (01) to retrieve items from the station storage unit (02) and store them in the mobile storage unit (03) of the service robot (01).
A29. The retail method according to Clause A28, wherein the retail system further comprises an ordering program operating on a terminal device;
   the ordering program comprises a shopping interface and an order interface, wherein the shopping interface is configured to display a list of available items for sale to the user, and the order interface is configured to complete the order checkout process and record the delivery location information;
   the method comprising:
      generating the order interface based on the items selected by the user from the item list displayed on the shopping interface;
      obtaining the delivery location information entered by the user in the order interface and determining the item to be delivered based on the items ordered and checked out in the order interface;
      generating an order request for the user based on the delivery location information and the item to be delivered.
A30. The retail method according to Clause A28 or Clause A29, wherein the method comprises:
   calculating the total inventory of each item based on the inventory of items in the plurality of mobile storage units (03) within a preset delivery range of the delivery location;
   determining the items with an inventory total greater than a first inventory threshold as recommended items;
   prioritizing the display of the recommended items in the item list on the shopping interface; and/or setting a discounted price for the recommended items based on preset discount rules.

## Claims

1. A retail system, wherein the retail system comprises a plurality of service robots (01), a plurality of storage units, and a scheduling unit;
the storage units comprise station storage units (02) and mobile storage units (03); the station storage units (02) are arranged at predetermined locations, the mobile storage units (03) are disposed inside the service robots (01), and the loading capacity of the station storage units (02) is greater than the loading capacity of the mobile storage units (03);
the scheduling unit is further configured to, in response to an order request from a user, select a target service robot from the plurality of service robots (01) based on a delivery location corresponding to the order request and an item to be delivered, and control the target service robot to deliver the item to the delivery location;
the scheduling unit is configured to instruct the service robot (01) to retrieve an item from the station storage unit (02) and store the item in the mobile storage unit (03) of the service robot (01);
wherein the scheduling unit comprises a first scheduling subunit located in a server, and a second scheduling subunit located in a selected robot;
wherein the first scheduling subunit is configured to generate and transmit a task route to the selected robot, and the second scheduling subunit is configured to receive the task route from the first scheduling subunit and control the selected robot to navigate along the task route;
wherein the second scheduling subunit is further configured to receive and analyze environmental factors surrounding the selected robot while navigating the task route, and to generate real-time navigation adjustments based on the environmental factors to guide the selected robot along the task route;
wherein each service robot (01) moves within a predetermined patrol range; the scheduling unit is further configured to:
acquire historical sales data and/or traffic data within the predetermined patrol range of each service robot (01);
designate an area as a target patrol area when the historical sales data exceeds a preset sales threshold and/or the traffic data exceeds a preset traffic threshold;
update the patrol route of the service robot (01) within the patrol range based on the target patrol area, so that the service robot (01) passes through the target patrol area and/or stays within the target patrol area for a predetermined duration.

2. The retail system according to Claim 1, wherein the scheduling unit is further configured to:
when the target service robot arrives at the delivery location and fails to identify a target user to receive the item to be delivered, search for and connect to at least one monitoring device within the area corresponding to the delivery location;
select a temporary storage position for the item based on the monitoring image of at least one monitoring device, and control the target service robot to place the item to be delivered at the temporary storage position; and,
the scheduling unit is optionally configured to monitor the receipt status of the item to be delivered based on the monitoring image of at least one monitoring device.

3. The retail system according to Claim 1, wherein the service robot (01) is provided with a visual acquisition module;
the visual acquisition module is configured to capture environmental images of the location where the service robot (01) is situated;
the scheduling unit is further configured to:
before the target service robot delivers the item to be delivered to the user, identify and verify the delivery location and/or the user identity based on the environmental images;
before the service robot (01) transfers items to another service robot (01), identify and verify the identity of the other service robot (01) based on the environmental images;
wherein the scheduling unit is optionally configured to:
monitor whether there are hygiene issues and/or safety risks at the location of the service robot (01) based on the environmental images; when hygiene issues and/or safety risks are detected, send an alert message to the supervisory personnel at the location;
wherein the scheduling unit is optionally configured to recognize traffic data based on the environmental images.

4. The retail system according to Claim 1, wherein the service robot (01) further comprises an item retrieval compartment, the item retrieval compartment being configured to display a preset quantity of some or all categories of items stored by the service robot (01), or the item retrieval compartment being configured to display the item to be delivered that the target service robot is delivering.

5. The retail system according to Claim 1, wherein the storage units further comprise an instant storage unit; the scheduling unit is further configured to control the target service robot to retrieve the item to be delivered from the instant storage unit and deliver it to the delivery location; wherein the instant storage unit comprises at least one of a self-service storage locker, a self-service takeaway locker, a self-service parcel locker, a shared equipment locker, or a self-service vending locker.

6. The retail system according to Claim 1, wherein the retail system further comprises an ordering program operating on a terminal device;
the ordering program comprises a shopping interface and an order interface, wherein the shopping interface is configured to display a list of available items for sale to the user, allowing the user to select items from the list;
the order interface is configured to complete the order checkout process and record the delivery location information;
wherein the scheduling unit is further configured to: obtain the delivery location information entered by the user in the order interface and determine the item to be delivered based on the items ordered and checked out in the order interface; and generate an order request for the user based on the delivery location information and the item to be delivered; and,
wherein the terminal device comprises a mobile phone, a tablet, a computer, a smart wearable device, a smart home device, or a smart in-vehicle device.

7. The retail system according to Claim 6, wherein the scheduling unit is further configured to:
calculate the total inventory of each item based on the inventory of items in the plurality of mobile storage units (03) within a preset delivery range of the delivery location;
determine the items with an inventory total greater than a first inventory threshold as recommended items;
prioritize the display of the recommended items in the item list on the shopping interface; and/or set a discounted price for the recommended items based on preset discount rules.

8. The retail system according to Claim 1, wherein the scheduling unit is further configured to:
select a first-type service robot and a second-type service robot from the plurality of service robots (01), wherein the mobile storage unit (03) of the first-type service robot is configured to store any category of items, and the mobile storage unit (03) of the second-type service robot is configured to store multiple categories of items.

9. The retail system according to Claim 1, wherein the service robot (01) is provided with a first communication module and a second communication module;
the first communication module is configured for data exchange between the service robot (01) and the scheduling unit, and the second communication module is configured for data exchange between service robots (01).

10. The retail system according to any one of Claims 1 to 9, wherein the service robot (01) comprises a vending robot (011) and a replenishment robot (012);
the mobile storage unit (03) comprises a primary storage unit (031) and a secondary storage unit (032);
the primary storage unit (031) is disposed inside the vending robot (011), and the secondary storage unit (032) is disposed inside the replenishment robot (012);
the scheduling unit is configured to, in response to an order request from a user, select a target vending robot from the plurality of vending robots (011) based on the delivery location corresponding to the order request and the item to be delivered, and control the target vending robot to deliver the item to the delivery location;
the scheduling unit is further configured to instruct the replenishment robot (012) to retrieve items from the station storage unit (02) and store them in the secondary storage unit (032) of the replenishment robot (012);
instruct the replenishment robot (012) and the vending robot (011) to transfer part or all of the items from the secondary storage unit (032) to the primary storage unit (031).

11. The retail system according to Claim 10, wherein at least one replenishment robot (012) corresponding to the vending robot (011) is provided within a first replenishment range (041) of the vending robot (011);
at least one station storage unit (02) corresponding to the replenishment robot (012) is provided within a second replenishment range (042) of the replenishment robot (012).

12. The retail system according to Claim 10, wherein the vending robot (011) is a first-type service robot, and the replenishment robot (012) is a second-type service robot;
the scheduling unit is further configured to:
when the inventory of items in the vending robot (011) falls below a second inventory threshold, instruct the replenishment robot (012) within the first replenishment range (041) of the vending robot (011) to meet with the vending robot (011) and transfer part or all of the items in the secondary storage unit (032) to the corresponding primary storage unit (031);
when the quantity of the item to be delivered exceeds the inventory of the target vending robot, instruct the replenishment robot (012) and/or other vending robots (011) within the first replenishment range (041) of the vending robot (011) to meet with the vending robot (011) and transfer part or all of the corresponding items in the replenishment robot (012) and/or other vending robots (011) to the primary storage unit (031) of the target vending robot.

13. The retail system according to Claim 10, wherein the scheduling unit is further configured to:
calculate the total inventory of each item based on the inventory of items in the plurality of mobile storage units (03) within a preset delivery range of the delivery location;
if the total inventory of any item is less than a third inventory threshold, generate replenishment parameters for a target replenishment robot within the preset delivery range, wherein the replenishment parameters include item information and item quantity;
instruct the target replenishment robot to retrieve the corresponding items from the corresponding station storage unit (02) according to the replenishment parameters and store them in the secondary storage unit (032) of the target replenishment robot;
wherein the scheduling unit is further configured to:
if the total inventory of any item is less than a fourth inventory threshold, generate replenishment parameters for the station storage unit (02) within the second replenishment range (042) of the target replenishment robot, wherein the fourth inventory threshold is greater than the third inventory threshold;
replenish the station storage unit (02) based on the replenishment parameters of the station storage unit (02).

14. The retail system according to Claim 13, wherein the scheduling unit is further configured to:
monitor in real time the number of replenishment robots (012) within the first replenishment range (041) of each vending robot (011);
when the number of replenishment robots (012) falls below a preset quantity, expand the first replenishment range (041) to a third replenishment range.

15. The retail system according to any one of the preceding claims, wherein the analysis of the environmental factors is performed using a second artificial intelligence model.
